# EUROPEAN PATENT SPECIFICATION

(11) **EP 3 952 233 B1**
(45) Date of publication and mention of the grant of the patent: **04.09.2024**
(21) Application number: 20884481.1
(22) Date of filing: 04.11.2020
(51) Int. Cl.: H04L 47/27, H04L 69/163

(54) **TCP CONGESTION CONTROL METHOD, APPARATUS, TERMINAL, AND READABLE STORAGE MEDIUM**
VERFAHREN ZUR STEUERUNG DER TCP-ÜBERLASTUNG, VORRICHTUNG, ENDGERÄT UND LESBARES SPEICHERMEDIUM
PROCÉDÉ DE CONTRÔLE DE CONGESTION DE TCP, APPAREIL, TERMINAL ET SUPPORT DE STOCKAGE LISIBLE

(30) Priority: 05.11.2019 CN 201911073237
(43) Date of publication of application: 09.02.2022
(73) Proprietor: ZTE Corporation, Shenzhen, Guangdong 518057 (CN)
(72) Inventor: HUI, Yi, Shenzhen, Guangdong 518057 (CN)
(74) Representative: Canzler & Bergmeier Patentanwälte Partnerschaft mbB
(86) International application number: PCT/CN2020/126570
(87) International publication number: WO 2021/088893

(56) References cited:
- WO-A1-2016/072836
- CN-A- 106 686 621
- CN-A- 106 713 166
- CN-A- 108 111 430
- CN-A- 108 111 430
- US-A1- 2018 219 787
- US-B1- 10 257 097
- LI WEI ET AL: "QTCP: Adaptive Congestion Control with Reinforcement Learning", IEEE TRANSACTIONS ON NETWORK SCIENCE AND ENGINEERING, IEEE, vol. 6, no. 3, 1 July 2019 (2019-07-01), pages 445 - 458, XP011743487, DOI: 10.1109/TNSE.2018.2835758
- YAN ZHANG ET AL: "On Wide Area Network Optimization", IEEE COMMUNICATIONS SURVEYS & TUTORIALS, IEEE, USA, vol. 14, no. 4, 1 October 2012 (2012-10-01), pages 1090 - 1113, XP011471433, ISSN: 1553-877X, DOI: 10.1109/SURV.2011.092311.00071

## Description

### TECHNICAL FIELD

The present disclosure relates to but not limited to the field of computer communication network technology, and particularly relates to but not limited to a TCP congestion control method and apparatus, a terminal, and a readable storage medium.

### BACKGROUND

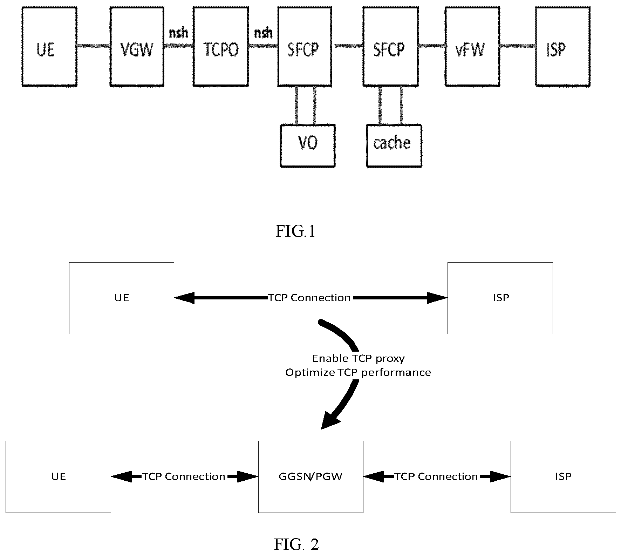

Wireless networks have specific transmission features, such as there is a disorder in message forwarding, a packet loss cannot be determined accurately and timely and radio resources are not enough during a busy time period. Upon a case as such, a rate of access to the Internet by a user would change abruptly, affecting an access to the Internet experience by the user. FIG. 1 is a network graph for a core network where TCPO is located. A transmission control protocol (TCP) proxy and an optimization network unit (which is hereinafter referred to as TCPO) is disposed on a middle node between a user terminal (UE) and an Internet service provider (ISP). The TCP connection between the UE and the ISP is divided into two sections. A TCP protocol forwarding performance may be optimized through such mechanisms as congestion control and cache of the network unit per se according to the transmission feature of the wireless network and an action feature of a mobile user, so as to reduce cases where a speed of network access decreases due to wireless transmission disorder and packet loss, and improve network access experience (including web browsing, FTP downloading and video businesses) of an 2G/3G/4G mobile user.

TCPO network units have been applied commercially at a large scale, a key component thereof is a congestion control algorithm. Algorithms already implemented include those referring to TCP protocols in freebasd and linux, such as Newreno, cubic, westwood, cdg and fast. However, a conventional TCP grows too slowly. A network with a bandwidth of 10g multiplied by 100ms cannot be taken full advantage of unless there is a congestion window (cwnd) of 10w packets. For newreno, 5w packets are taken as a valve, and then one more cwnd is added when one more round-trip time (rtt) is bought. In this way, for reaching congestion window (cwnd) of 10w packets, it will last for 1.4 hours. As a result, the flow is off in most cases. Therefore, how to achieve or approach a maximum usage is a problem to be solved with a TCP congestion control algorithm, especially in a long file name (lfn). For example, a CUBIC algorithm is an advanced version of a BIC-TCP algorithm, which increases friendliness to a standard TCP on a basis of being in conformity to the BIC-TCP algorithm. The CUBIC algorithm takes a time delay from algorithm congestion until now as a basis for obtaining a value of cwnd, and uses a cubic function curve to fit growth of a window at a peak value, which is a default standard in the linux operation system. To sum up, the TCPO performs traffic congestion control on a data packet by referring to the TCP standard and such implementation as the freebsd.

In an ordinary TCP congestion control algorithm, what is considered is a link determination on end to end and client to server. This is because due to limitation of a TCP, an actual network condition cannot be obtained. Therefore, it is determined whether a network channel is full according to time delay and packet loss and then deceleration or acceleration is performed initiatively. In general, an initial design of the TCP does not include a sense of network congestion information. Therefore, in a traditional TCP algorithm, determination on whether a network is busy according to a rtt time delay or a packet loss is quite one-sided. However, these are methods that have to be taken by a PC or UE terminal. After all, the terminal UE does not sense a network status.

In addition, as the 5g era begins, and with the Internet of things and the Internet of vehicles, multiple terminals access the networks, the conventional TCP solution is becoming inefficient, and equality of TCP makes every flow equal, thereby greatly making available resources of effective phone users insufficient.

Document (LI WEI ET AL: "QTCP: Adaptive Congestion Control with Reinforcement Learning",IEEE TRANSACTIONS ON NETWORK SCIENCE AND ENGINEERING, IEEE, vol. 6, no. 3, 1 July 2019 (2019-07-01), pages 445-458) describes an Adaptive Congestion Control with Reinforcement Learning method. The solution disclosed integrates reinforcement-based Q-learning framework with TCP design, called QTCP. QTCP enables senders to gradually learn the optimal congestion control policy in an on-line manner. QTCP does not need hard-coded rules, and can therefore generalize to a variety of different networking scenarios. Moreover, we develop a generalized Kanerva coding function approximation algorithm, which reduces the computation complexity of value functions and the searchable size of the state space.

Document (CN 108 111 430 A (BEIJING BAIDU NETCOM SCI & TEC) 1 June 2018) describes a method involving obtaining user access information from a congestion window table connected with an initial window. A Transmission Control Protocol(TCP) window is selected according to the user access information. A TCPconnection of a user is established using the initial window. The congestion window table is selected according to a user TCPstream of TCPconnection information. A web service request is received according to the user access information from the congestion window table. An initial window value is randomly selected according to a segment set of the initial window.

A processor and a cache in a link capacity and exchange node in a network are limited in terms of operation. When a requirement on the network excesses an operation limit of the cache or the processor, a congestion is incurred. A congestion control is to prevent too much data from being injected into a network, thereby a router or a link in the network would not be overloaded. Common methods for congestion control include 1. slow start and congestion control; 2. fast retransmission and fast recover. One implementation thereof includes the following:
(1) A transmitter maintains a variable called "congestion window", and the variable and a reception port collectively decide a transmission window of the transmitter.
(2) When a host starts to transmit data, the host transmits a probe message of 1 byte, so as to prevent a large number of bytes from being injected in the network simultaneously and then causing congestion or making the congestion worse.
(3) When an acknowledgement on a data of the first byte is received, a message of two bytes is transmitted;
(4) If an acknowledgement on two bytes is received, four bytes will be transmitted, and an increase continues by an index of 2;
(5) Finally, a preset "slow start threshold", for example, 24, may be achieved. 24 means 24 groups are transmitted at a time, which in conformity to the following condition determination:
   1. cwnd < ssthresh: the slow start algorithm continues to be used;
   2. cwnd > ssthresh: the slow start algorithm ends and a congestion prevention algorithm starts;
   3. cwnd = ssthresh: either the slow start algorithm or the congestion prevention algorithm may be used.
(6) The congestion prevention algorithm includes that a congestion window of the transmitter is increased by 1 each time a round-trip time RTT passes, i.e., the congestion window grows regularly in a linear manner;
(7) When there is network congestion, for example, when there is packet loss, the slow start threshold is set as half of the original size, and then the cwnd is set as 1 to implement the slow start algorithm (starting from a low level but increasing exponentially);

It may be considered that a minimum value of the congestion window and a notification window is taken as a transmission upper limit by the transmitter. The congestion window is used for a traffic control by the transmitter, while the notification window is used for the traffic control by the receiver.

A TCP layer uses a protocol control block (PCB) to store a plurality pieces of information required by each of user datagram protocol (UDP) and TCP sockets. An Internet protocol maintains an Internet protocol control bock and a TCP control block. Because the UPD is independent, all information required by one port node may be found in an Internet PCB and the UDP control blocks do not exist.

The Internet PCB contains information shared by the UDP and TCP port nodes: external and local IP addresses, external and local port numbers, an IP head prototype, an IP option used by the port node and a pointer directed to an entry to a destination address table of the port node. The TCP control block contains all node information maintained by the TCP for each connection: sequence numbers in two directions, size of a window, times of retransmission and so on.

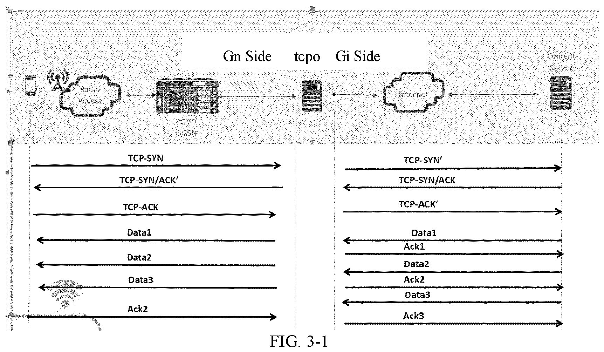

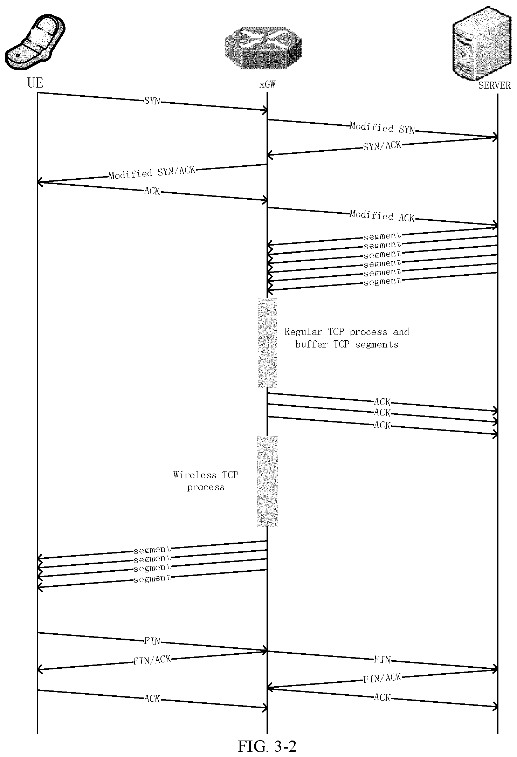

A core procedure of an available system architecture is shown in FIGs. 2, 3-1 and 3-2, and the core business logic thereof is:
1. A user UE is accessed;
2. The user initiates a TCP flow request message;
3. TCPO accepts the request;
4. TCPO requests ISP for a resource;
5. TCPO acquires an ISP resource and cashes the acquired ISP resource into a cache queue;
6. TCPO acquires a transmission quota of N data packets by a TCP congestion control algorithm module;
7. TCPO sets a congestion window of a TCP layer control block according to the quota, and transmits the data packet of the cache queue to UE based on the principle of sliding window;
8. TCPO confirms the transmission packet according to a received acknowledgement ack message of UE, and reenters to step 6 to reacquire the quota;
9. All processes of the cache queue are completed.

### SUMMARY

The present disclosure provides a TCP congestion control method and apparatus, a terminal, and a readable storage medium.

Other features of the present application and corresponding advantageous effects are described in the latter part of the present disclosure and it shall be understood that at least some of the advantageous effects will become obvious according to the description in the specification of the present application. The invention is defined by the appended claims.

### BRIEF DESCRIPTION OF THE DRAWINGS

FIG. 1 is a schematic diagram illustrating network graph for a core network where a TCPO is located according to the related art of the present disclosure.
FIG. 2 is a schematic diagram illustrating a core flow of a system architecture according to the related art of the present disclosure.
FIG. 3-1 is a schematic diagram illustrating a core flow of a system architecture according to the related art of the present disclosure.
FIG. 3-2 is a schematic diagram illustrating a TCPO transmission flow according to the related art of the present disclosure.
FIG. 4 is a schematic diagram illustrating a flow of a TCP congestion control method according to an embodiment of the present disclosure.
FIG. 5 is a schematic diagram illustrating a deep learning model according to an embodiment of the present disclosure.
FIG. 6 is a schematic diagram illustrating a result obtained when performing a clustering algorithm operation on a sample user according to an embodiment of the present disclosure.
FIG. 7-1 is a schematic diagram illustrating a TCP congestion control apparatus according to an embodiment of the present disclosure.
FIG. 7-2 is a schematic diagram illustrating a determining module in the TCP congestion control apparatus according to the embodiment of the present disclosure.
FIG. 7-3 is a schematic diagram illustrating a first determining module in the TCP congestion control apparatus according to the embodiment of the present disclosure.
FIG. 7-4 is a schematic diagram illustrating another determining module in the TCP congestion control apparatus according to the embodiment of the present disclosure.
FIG. 7-5 is a schematic diagram illustrating another TCP congestion control apparatus according to the embodiment of the present disclosure.
FIG. 7-6 is a schematic diagram illustrating another determining module in the TCP congestion control apparatus according to the embodiment of the present disclosure.
FIG. 8 is a schematic diagram illustrating a terminal according to an embodiment of the present disclosure.

### DETAILED DESCRIPTION

In order to clarify the objective, the technical solution and the advantages of the present disclosure, embodiments of the present disclosure will be further described in detail with reference to the drawings and particular implementations. It shall be appreciated that the embodiments described in detail are only for explaining rather than limiting the present disclosure.

An embodiment of the present disclosure provides a TCP congestion control method, apparatus, terminal and readable storage medium. The present disclosure mainly solves a problem that in a current related art, the efficiency of a TCP solution is low when a large number of terminals are accessing to the network. Herein, TCP fairness leads to equality of flows, which greatly reduces resources available to a mobile user and thus makes the user experience worse.

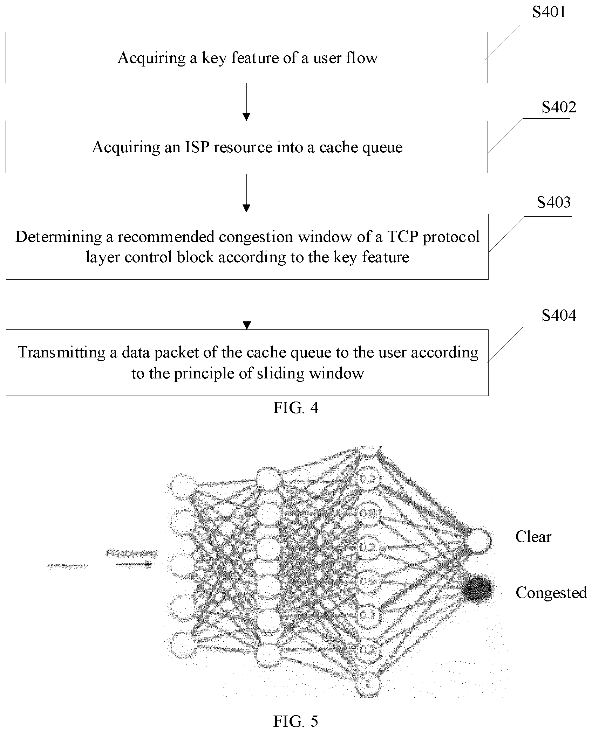

With reference to FIG. 4, the TCP congestion control method provided in the present embodiment includes:
S401: acquiring a key feature of a user flow;
S402: acquiring an ISP resource and caching the acquired ISP resource into a cache queue;
S403: determining a recommended congestion window of a TCP protocol layer control block according to the key feature; and
S404: transmitting a data packet of the cache queue to the user according to a principle of sliding window.

In some embodiments, a TCPO acquires an ISP resource and caches the acquired ISP resource into the cache queue. Herein, the ISP resource is a resource generated according to a user flow request message. Particularly, the user accesses and initiates a TCP flow request message, the TCPO accepts the request and requests ISP for the resource. The TCPO acquires the ISP resource and caches the acquired resource into the cache queue.

In some embodiments, the key feature of a user flow may include a quintuple group consisted of a source IP address, a source port, a destination IP address, a destination port and a transmission layer protocol, and a UE network format, location information and the like.

In some embodiments, a particular implementation of determining the recommended congestion window (hereinafter, "congestion window" refers to a size of the congestion window, which is a commonly known expression in the art) of the TCP protocol layer control block according to the key feature may include: the TCPO transmits a key feature of the user to a particular algorithm module, and obtains through calculation that a transmission quota corresponding to the user flow is N data packets. The TCPO sets the recommended congestion window of the TCP protocol layer control block according to the above transmission quota, and transmits the data packet of the cache queue to the UE according to the principle of sliding window.

In some embodiments, the TCPO confirms a transmission packet according to an acknowledgement ACK message received from the UE, and then performs the step S403 to reacquire the recommended congestion window and repeat processes as described in the above until the cache queue is completely processed.

In a related art, it is concluded whether the network is busy according to an rtt time delay or a packet loss. If it is concluded that the network is not busy, the congestion window is increased continuously and blindly, while if it is concluded that the network is busy, the congestion window is decreased continuously and blindly, which is a passive way of adjusting the congestion window. While, according to the embodiment of the present application, the step of determining the recommended congestion window according to the key feature makes it possible to initiatively predetermine a possible network congestion. The congestion window may be adjusted initiatively to avoid the network congestion.

In some embodiments, the step of determining the recommended congestion window of the TCP protocol layer control block according to the key feature includes: establishing a model of the recommended congestion window which comprises groups for users and recommended congestion windows each corresponding to one of the groups, and determining the recommended congestion window corresponding to the user according to the group of the user determined in accordance with the key feature.

It shall be noted that in some embodiments, the step of establishing the model of the recommended congestion window includes: acquiring a core business indicator of each sample user; processing the core business indicator with the clustering algorithm to obtain preliminary groups for users and preliminary recommended congestion windows each corresponding to one of the preliminary groups; acquiring a negative-incentive signal generated when a user in each of the preliminary groups perform a TCPO business procedure according to a corresponding preliminary recommended congestion window; and re-determining groups for the sample users and the recommended congestion windows each corresponding to one of the groups by taking the negative-incentive signal as a negative sample examination indicator.

It shall be noted that in order to promote accuracy of the model of the recommended congestion window, the number of sample users and the type distribution of sample users shall be diverse. Because it is difficult to cover all the types of users, when establishing a recommended congestion window model, a compromise between accuracy of the model and reasonability of the samples shall be achieved to ensure both a relative accuracy of the recommended congestion window model and reasonable resource occupancy for establishing the recommended congestion window model and the cost.

In some embodiments, in order to facilitate acquiring the core business indicator of each sample user and updating the recommended congestion window model, data collection and analysis may be performed by establishing a traffic analysis server, i.e., a network access point (NAP). Collection may be performed in dimensions of at least part of the following: year, month, date, week, hour, minute, second, congestion window, activity, base station, target IP, source port, target port, format, RTT time delay, accumulated traffic, whether being congested or not, queue depth and the like, but the present disclosure is not limited thereto. A determination manner of the activity may be found in the following description. One embodiment of data collection is shown in Table 1:

**Table 1**

| Dimension | Mort h | Date | Time | Week | Cwnd | Depth | Activi ty | Target IP | Original Port | Target Port | Format | rtt | Accumu lated | Congest edornot | Queue Depth |
|---|---|---|---|---|---|---|---|---|---|---|---|---|---|---|---|
| | | | | | | | | | | | | | Traffic | | |
| Sample 1 | 11 | 12 | 13 | Sat. | 200 | 9 | 1013 | 201.11.2 .100 | 1008 | 80 | 4G | 23 | 290M | No | 1200 |

In some embodiments, advantages of a core network can be used to collect user location information in non-real time, that is, to collect information of a base station corresponding to the user in non-real time, as an alternative dimension for collection.

It should be noted that the core business indicator of the sample user of the recommended congestion window model may further be obtained by those skilled in the art in another way.

It shall be noted that after the recommended congestion window model is established, the recommended congestion window model may not be updated, or may be updated as needed by supplementing core business indicators of new sample users. In order to make the recommended congestion window acquired through the recommended congestion window model more accurate, updating may be performed according to a preset time interval which may be set according to requirements of those skilled in the art.

In some embodiments, the recommended congestion window may be established through a traditional algorithm which speeds up slowly, or may be established through an artificial intelligence (AI) algorithm. Through the AI algorithm, the clustering algorithm operation is performed on the core business indicators of the users. A clustering is performed to obtain M groups, i.e., M groups are obtained through preliminary grouping. Modeling and learning are performed on the M groups. An input layer evaluates the group M by using the negative-incentive signal which is generated when a user in each of the preliminary groups performs a TCPO business procedure according to a corresponding preliminary recommended congestion window. With regard to a sample Mi (i is a number from 1-M) and based on theoretical analysis and practical application, the negative-incentive signal received in a group corresponding to the sample Mi may be the following signals with different weight values: a triggered network congestion, a packet loss, acks repeated twice, transmission time delay, achieving an extinguishing quota, and achieving the annealing quota, which may be used as an evaluation indicator for negative sample. It shall be noted that the quotas for triggering emergency extinguishing and emergency annealing will be described in the following. Different transmission resources are distributed to different types of users. Herein, the different transmission resources include but not limited to at least one of the following: the recommended congestion window, a size of the cache queue, a size of a starting transmission window, a flow priority level and so on. A group with best evaluation is taken as a recommended group Mo. The group Mo and an average wsnd transmission window size of the group are transmitted to a main control module of the TCPO. For a TCP control block of matched groups, a recommendation transmission window is added so as to facilitate selection of the transmission window.

In some embodiments, as shown in FIG. 5, the step of determining the recommended congestion window of the TCP protocol layer control block according to the key feature may further include: acquiring a core business indicator of each sample user to establish a deep learning model and performing deep learning model training, acquiring a fitting function between the core business indicator and a network congestion or a fitting function between the core business indicator and a time delay exceeding a preset delay value, and determining the recommended congestion window corresponding to the user according to the fitting function and the key feature.

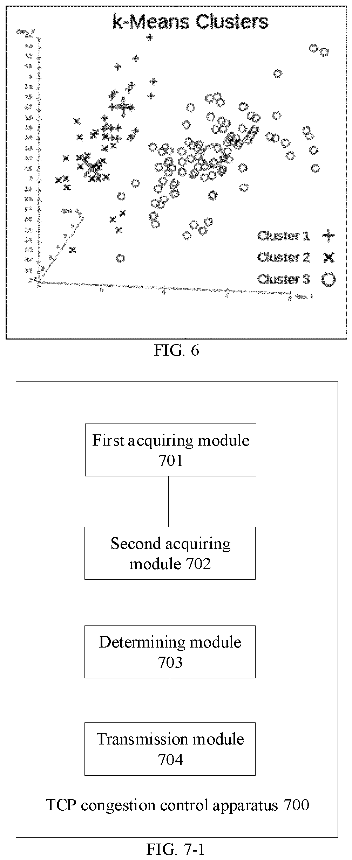

In some embodiments, as shown in FIG. 6, M groups are obtained after performing the clustering algorithm on the sample users and then an N-layer deep learning model may be established. In this way, deep modeling training is performed on indicator data sampled in a period of time, where the input is a table of feature values of the M groups, and learning and training are performed by using positive and negative samples. An objective for this is to learn, through sample data, feature indicators and a fitting function Y that causes network congestion or excessive time delay. In this way, for a user flow in a similar condition, the recommended congestion window may be calculated through the fitting function Y, so as to transmit a data flow of an appropriate size. Compared with the method of performing initialization on the TCPO, then periodically transmitting the user key feature to NAP through another task thread, performing grouping determination and calculation by the NAP, periodically backfilling the recommended congestion windows of the groups for subsequent use by the TCPO, this method obtains the recommended congestion window of the user flow through the recommended congestion window model when the user flow requests the recommended congestion window calculation, which avoids impact of calculation of a recommended congestion model on performance of the TCPO.

In some embodiments, before the step of determining the recommended congestion window of the TCP protocol layer control block according to the key feature, the following steps are included: acquiring accumulated traffic of the user; acquiring a current activity index of a TCP control block support flow corresponding to the user, if the accumulated traffic is greater than a preset accumulated traffic threshold; if one current activity index greater than a preset activity threshold is available, acquiring a hottest user list in a current system, the hottest user list comprising a preset number of users corresponding to the largest congestion window, among users with the accumulated traffic exceeding the preset accumulated traffic threshold and the current activity index greater than a preset activity index in the current system; if the user is not in the hottest user list, acquiring smallest congestion windows corresponding to respective users in the hottest user list; and if a current congestion window of the user is greater than the smallest congestion window, adding the user to the hottest user list.

It shall be noted that the preset accumulated traffic threshold may be determined according to a practical requirement of those skilled in the art and thus will not be limited to the above.

It shall be noted that the details of making comparison according to the set threshold is common knowledge of those skilled in the art, and being equal to the preset threshold may be taken as a condition for implementing a following step. For example, in this embodiment, the condition may further be: acquiring the current activity index of the TCP control block support flow corresponding to the user, if the accumulated traffic is equal to the preset accumulated traffic threshold. In order to avoid unnecessary repetition in the present disclosure, no further example is listed herein.

In some embodiments, acquiring a user's accumulated traffic may be understood as acquiring an accumulated traffic of all TCP flow request messages of the user.

It shall be noted that the current congestion window of the user may be a congestion window obtained when the latest data packet of the cache queue is received by the user but before the recommended congestion window is acquired by the user.

It shall be noted that after the user is added to the hottest user list, the last user in the hottest user list will be removed from the hottest user list. That is, the user will replace a user with the smallest congestion window.

It shall be noted that when there are multiple flows for the user, the user's current congestion window is equal to a sum of congestion windows each corresponding to one of the flows. For example, a current hottest user list includes user 1 and user 2. The user 1 has flow A and flow B, while the user 2 has flow C. Herein, the current congestion window of flow A is 5, the current congestion window of flow B is 8, and the current congestion window of flow C is 9. As a result, the current congestion window of user 1 is 13 (as obtained by 5+8), the current congestion window of the user 2 is 9, and thus a smallest congestion window corresponding to each user in the hottest user list is 9. A current user 3 is not in the hottest user list, an accumulated traffic of the user 3 is greater than the preset accumulated traffic threshold, and a current activity index of the user 3 is greater than the preset activity threshold. Thus, the current congestion window of the user 3 is 10. At this time, the current congestion window of the user 3 is greater than the smallest congestion window, and the user 2 is replaced with the user 3 in the hottest user list.

In some embodiments, the step of acquiring the current activity index of the TCP control block support flow corresponding to the user includes: when receiving an ack acknowledgement, acquiring an activity index last time reported and time when the activity index was reported last time; and making the current activity index equal to a sum of the activity index last time reported plus a linear accumulated value, if the current congestion window is greater than a preset congestion window, a time interval from the current time to the time when the activity index was reported last time is greater than a preset time interval, and the activity index last time reported is less than a maximum activity index.

It shall be noted that the preset time interval is configured for distinguishing whether the transmission is in or not in a continuous transmission state. Considering an effect of the time delay ack, the preset time interval may be 3 times an average RTT, or may be set by those skilled in the art.

It shall be noted that a value of the preset congestion window may be set by those skilled in the art according to an actual requirement. The preset congestion window is configured to reduce calculation and filter out small flow transmissions.

It shall be noted that an excessively large activity index would make the current flow impossible to reflect the latest speed reduction in time, so there is usually a limit on a maximum activity index thereof, which may limit unreasonable increase in the current activity index. The maximum activity index may be set by those skilled in the art according to an actual requirement or experience.

It shall be noted that the linear accumulated value may further be set by those skilled in the art according to an actual requirement or experience. The linear accumulated value is a positive number.

In some embodiments, the step of acquiring the current activity index of the TCP control block support flow corresponding to the user includes: when receiving the ack acknowledgement, making the current activity index equal to an initial activity index if the activity index reported last time fails to be acquired.

It shall be noted that if the activity index reported last time fails to be acquired, generally, the user has not received the data packet of the cache queue. Thus, the congestion window of the user is still an initial congestion window. At this time, the current activity index of the current is equal to the initial activity index. Herein, the initial activity index may be set by those skilled in the art based on the actual requirement or experience.

In some embodiments, the initial activity index is equal to 1, the linear accumulated value is equal to 1 and the maximum activity index is equal to 10. It shall be noted that those skilled in the art may set the initial activity index as a negative number or another positive number. The other linear accumulated values and maximum activity indices are modified based on a corresponding logic.

In some embodiments, the value of the activity index reflects a traffic activity of the current flow. The activity index may be used as an identification in a following user classification, an index collection and a system control. By classifying the activity indices into different levels, a reverse traffic control at a system level may be performed on flows of the same type in the entire system. In some embodiments, the value of the current activity index ranges from 1 to 9 in which a mechanism of "linear increments and punitive decrements and multiplication reduction" is applied, which may reflect an activity condition of the flow and provides good feedback to initiative speed reduction of the flow. Generally, when the congestion window is reduced, a bottle neck appears at a UE side network, initiative slowdown by way of penalty is adopted to obtain a concave function curve. Thus, the flow usually does not become active soon. An excessively large current activity index would result in that a recent slowdown cannot be fed back quickly to the current flow. Therefore, the current activity index is generally set as less than 10 to obtain a good effect. In addition, it would be a waste of performance to calculate the current activity index for an excessively small flow, which is useless. In addition, it would be useless to calculate the current activity index for a flow with excessively large time delay. According to a conventional TCP congestion algorithm, a flow with excessively large time delay does not speed up continuously. Specifically, if the flow is in session persistence, i.e., no data is transmitted temporarily but the flow still exists, and the window is large, the algorithm may be well applied to the condition. Due to the preset time interval, activity of the flow will maintain at a high level but does not continue to grow. Once the user continues to access to the Internet, the user may be quickly identified and treated as a highly active user. In conclusion, the algorithm may apply to most scenarios, and the amount of calculation is very small so that the performance of the original system will not be affected. Besides, the algorithm classifies users according to active levels, providing a means for subsequent reverse control of an overall system traffic.

In some embodiments, the step of determining the recommended congestion window of the TCP protocol layer control block according to the key feature includes: if the user is in the hottest user list, acquiring the current activity of the flow of the user, acquiring a load of the current system; and if an annealing quota is achieved, making the recommended congestion window smaller than or equal to the current congestion window, wherein, the annealing quota comprises: the load being greater than a first preset threshold and less than a second preset load, one current activity being greater than the activity threshold, and the current congestion window of the user being greater than a standard window, the standard window comprising an average value of the current congestion windows of the users in the hottest user list in the system within a preset time period.

It shall be noted that if the annealing quota is achieved, the recommended congestion window may be equal to the current congestion window or may be equal to the current congestion window multiplied by a first preset proportion. Herein, the first preset proportion is more than 0 and less than 1. A value of the first preset proportion may be set by the user or those skilled in the art per se and is not limited herein.

It shall be noted that in some embodiments, the hottest user list is a list to be updated in real time. When a system is started, the user flow needs to report a phone number, a source IP, or the congestion window. If the user flow reports the phone number, the congestion window corresponding to the user is an accumulated sum of congestion windows of all flows corresponding to the user.

It shall be noted that each time the user receives a message acknowledgement ACK, the user would report it to a shared memory region. If the congestion window corresponding to the user is greater than the smallest congestion window among the congestion windows corresponding to the users in the hottest user list, the user is added to the hottest user list by replaces the user with the smallest congestion window in the hottest user list. It may be appreciated that the hottest user list is a list of a number of users having large congestion windows within a time period. A TCPtimer regular reporting mechanism is set. A reporting period is 100 times the average rtt, and if no message is received within 100rtt, a list record will be initiatively cleared to guarantee update of the list. In this algorithm, a user having the largest sliding window in the system is added to the list through self-inspection each time a message acknowledge ACK is received, so that a global control body stores a sample of a standard window for the traffic of the user continuously accessing to the Internet during a short period of time of the current system, i.e., dw. A regular cleaning mechanism much greater than rtt reduces start resources of the timer. A mechanism in which the active flow automatically makes declaration in the ack process significantly reduces system loss of training all flows in rotation. Generally, active flows are only a small part of all flows, and are not updated unless when being active, thereby reducing pressure on the system caused by synchronous updates. Existence of the hottest user list may reflect traffic usage of users with large traffic in the system, and is an important monitoring target in traffic management.

In some embodiments, the step of determining the recommended congestion window of the TCP protocol layer control block according to the key feature includes: if the user is in the hottest user list, acquiring the current activity of the flow of the user, and acquiring the load of the current system; if an extinguishing quota is achieved, making the recommended congestion window smaller than the current congestion window; the extinguishing quota comprising: the load being greater than a second preset threshold, and the current congestion window of the user being greater than the standard window; and the standard window comprising the average value of the current congestion window of the user in the hottest user list in the system within the preset time period.

It shall be noted that the window shall be reduced when the extinguishing quota is achieved. At this time, the recommended congestion window is equal to the current congestion window multiplied by a second preset proportion. Herein the second preset proportion is more than 0 and less than 1, and a value of the second preset proportion may be set by the user or those skilled in the art per se and is not limited herein.

It shall be noted that a total traffic of the system is changing constantly, but a user sample with high traffic for the latest period of time may reflect a volume of the current traffic and may be taken as a basis for calculation. In this embodiment, on the basis of the original system, a low consumption and low cost manner is adopted to obtain sample data of users with high traffic as dynamic traffic reduction. This does not affect Internet accessing of a new user. Partial network concession may be pertinently performed on a user that constantly occupies the network for long time, which is in conformity to equality principles of TCP.

In some embodiments, the step of determining the recommended congestion window of the TCP protocol layer control block according to the key feature includes: acquiring the load of the current system, and if the load is less than the third preset threshold and the user is new, making the recommended congestion window equal to the standard window multiplied by a third preset proportion, the standard window comprising the average value of the current congestion window of the user in the hottest user list in the system within the preset time period.

It shall be noted that the third preset threshold is smaller than the first preset threshold and the second preset threshold.

It shall be noted that a new user may be a user to whom the data packet of the cache queue is not sent after the user is accessed and initiates a TCP flow request message, and the TCPO accepts the request and requests the ISP for a resource, and then the TCPO acquires the ISP resource and cache the ISP resource into the cache queue. Alternatively, it may be appreciated that the user is one that has not received the data packet of the cache queue.

It shall be noted that the third preset proportion is more than 0 and less than 1, and a value of the third preset proportion may be set by the user or those skilled in the art per se, for example, 50%.

In some embodiments, for the new user, an appropriate recommended congestion window may be directly acquired through the recommended congestion window and the fitting function. The initial congestion window may be taken as the recommended congestion window for the new user. It shall be noted that when the load of the system is less than the third preset threshold, a value of the initial congestion window may be set reasonably large to prevent data packet transmission from a long acceleration period while starting slow acceleration.

In some embodiments, the negative-incentive signal includes but not limited to at least one of the following: a triggered network congestion, a packet loss, acks repeated twice, transmission time delay, achieving the annealing quota, and achieving the extinguishing quota.

In some embodiments, the current hottest user list in the system may be acquired by establishing a shared storage hash table. When the user receives the data packet, the user's traffic and a size of the current transmission window are reported, and the activity is calculated according to a traffic activity algorithm. The activity algorithm involves the continuous transmission in a rising or falling range, and weight setting of the transmission window and an initial valve ratio. A purpose thereof is to record a relatively active user traffic and transmission window for a current period of time for necessary reference information for the system upon emergency annealing. Besides, an impact of system performance is considered. Herein, only some relatively active users rather than all users are recorded.

In some embodiments, after determining the recommended congestion window, a notification window of a reception terminal may further be acquired. It shall be noted that the congestion window is used by a transmitter for traffic control, while the notification window is used by a receiver for traffic control. After the notification window is acquired, the smaller one of the recommended congestion window and the notification window is taken as an upper limit of transmission.

The method provided in this embodiment will be further described with a particular example.

When the user UE accesses to the Internet, a link with TCPO is established through three TCP handshakes. There is at least one user flow. Meanwhile, a link is established between the TCPO and the web. The UE initiates a get request. At this time, in an uplink stage thereof, a key feature of the user flow is extracted. A get request is forwarded to the web, and the web returns data or a corresponding resource to a TCPO cache queue. The recommended congestion window corresponding to the user flow is matched through the TCP congestion control method provided in this example, and further, the cache data in the cache queue is returned to the UE based on the principle of sliding window.

The present disclosure provides a TCP congestion control method and apparatus, a terminal, and a readable storage medium. The TCP congestion control method includes: acquiring a key feature of a user when an ISP resource generated according to a TCP flow request message of the user is cached into a cache queue, determining a recommended congestion window of a TCP protocol layer control block according to the key feature, and transmitting a data packet of the cache queue to the user according to the principle of sliding window. Accordingly, a corresponding recommended congestion window is distributed according to a key feature of each user. As a result, there is no uniform standard for providing a corresponding recommended congestion window for different users. In this way, a resource available to an effective user and user experience are promoted.

This embodiment further provides a TCP congestion control apparatus. As shown in FIG. 7-1, a TCP congestion control apparatus 700 includes: a first acquiring module 701 configured to acquire a key feature of a user flow; a second acquiring module 702 configured to acquire an ISP resource generated according to a TCP flow request message of the user and cache the acquired ISP resource into a cache queue; a determining module 703 configured to determine a recommended congestion window of a TCP protocol layer control block according to the key feature; and a transmission module 704 configured to transmit a data packet of the cache queue to the user according to the principle of sliding window.

In some embodiments, a TCPO acquires an ISP resource and caches the acquired ISP resource into the cache queue. Herein, the ISP resource is a resource generated according to a TCP flow request message from the user. Particularly, the user accesses and initiates a TCP flow request message, the TCPO accepts the request and requests ISP for the resource. The TCPO acquires the ISP resource and caches the acquired resource into the cache queue.

In some embodiments, the key feature of a user flow may include a quintuple group consisted of a source IP address, a source port, a destination IP address, a destination port and a transmission layer protocol, and a UE network format, location information and the like.

In some embodiments, a particular implementation of determining the recommended congestion window of the TCP protocol layer control block according to the key feature may include: the TCPO transmits a key feature of the user to a particular algorithm module, and obtains through calculation that a transmission quota corresponding to the user flow is N data packets. The TCPO sets the recommended congestion window of the TCP protocol layer control block according to the above transmission quota, and transmits the data packet of the cache queue to the UE according to the principle of sliding window.

In some embodiments, the TCPO confirms a transmission packet according to an acknowledgement ACK message received from the UE, and then performs the step S403 to reacquire the recommended congestion window and repeat processes as described in the above until the cache queue is completely processed.

In a related art, it is concluded whether the network is busy according to an rtt time delay or a packet loss. If it is concluded that the network is not busy, the congestion window is increased continuously and blindly, while if it is concluded that the network is busy, the congestion window is decreased continuously and blindly, which is a passive way of adjusting the congestion window. While, according to the embodiment of the present application, the step of determining the recommended congestion window according to the key feature makes it possible to initiatively predetermine a possible network congestion. The congestion window may be adjusted initiatively to avoid the network congestion.

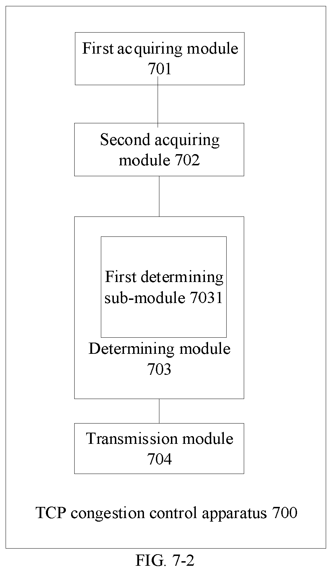

In some embodiments, as shown in FIG. 7-2, the determining module 703 includes: a first determining sub-module 7031 configured to establish a model of the recommended congestion window which comprises groups for users and recommended congestion windows each corresponding to one of the groups, and determining the recommended congestion window corresponding to the user according to the group of the user determined in accordance with the key feature.

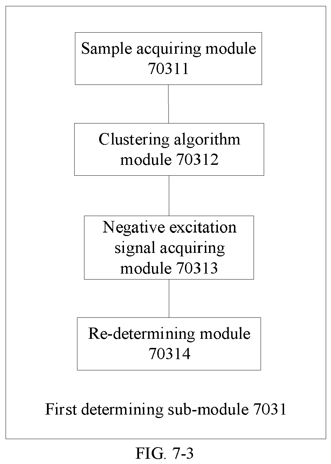

In some embodiments, as shown in FIG. 7-3, the first determining sub-module 7031 further includes: a sample acquiring module 70311 configured to acquire a core business indicator of each sample user; a clustering algorithm module 70312 configured to processing the core business indicator with the clustering algorithm to obtain preliminary groups for users and preliminary recommended congestion windows each corresponding to one of the preliminary groups; a negative-incentive signal acquiring module 70313 configured to acquire a negative-incentive signal generated when a user in each of the preliminary groups perform a TCPO business procedure according to a corresponding preliminary recommended congestion window; and a re-determining module 70314 configured to re-determine groups for the sample users and the recommended congestion windows each corresponding to one of the groups by taking the negative-incentive signal as a negative sample examination indicator.

It shall be noted that in order to promote accuracy of the model of the recommended congestion window, the number of sample users and the type distribution of sample users shall be diverse. Because it is difficult to cover all the types of users, when establishing a recommended congestion window model, a compromise between accuracy of the model and reasonability of the samples shall be achieved to ensure both a relative accuracy of the recommended congestion window model and reasonable resource occupancy for establishing the recommended congestion window model and the cost.

In some embodiments, in order to facilitate acquiring the core business indicator of each sample user and updating the recommended congestion window model, data collection and analysis may be performed by establishing a traffic analysis server, i.e., a network access point (NAP). Collection may be performed in dimensions of at least part of the following: year, month, date, week, hour, minute, second, congestion window, activity, base station, target IP, source port, target port, format, RTT time delay, accumulated traffic, whether being congested or not, queue depth and the like, but the present disclosure is not limited thereto. A determination manner of the activity may be found in the following description. One embodiment of data collection is shown in Table 1.

In some embodiments, advantages of a core network can be used to collect user location information in non-real time, that is, to collect information of a base station corresponding to the user in non-real time, as an alternative dimension for collection.

It should be noted that the core business indicator of the sample user of the recommended congestion window model may further be obtained by those skilled in the art in another way.

It shall be noted that after the recommended congestion window model is established, the recommended congestion window model may not be updated, or may be updated as needed by supplementing core business indicators of new sample users. In order to make the recommended congestion window acquired through the recommended congestion window model more accurate, updating may be performed according to a preset time interval which may be set according to requirements of those skilled in the art.

In some embodiments, the recommended congestion window may be established through a traditional algorithm which speeds up slowly, or may be established through an artificial intelligence (AI) algorithm. Through the AI algorithm, the clustering algorithm operation is performed on the core business indicators of the users. A clustering is performed to obtain M groups, i.e., M groups are obtained through preliminary grouping. Modeling and learning are performed on the M groups. An input layer evaluates the group M by using the negative-incentive signal which is generated when a user in each of the preliminary groups performs a TCPO business procedure according to a corresponding preliminary recommended congestion window. With regard to a sample Mi (i is a number from 1-M) and based on theoretical analysis and practical application, the negative-incentive signal received in a group corresponding to the sample Mi may be the following signals with different weight values: a triggered network congestion, a packet loss, acks repeated twice, transmission time delay, achieving an extinguishing quota, and achieving the annealing quota, which may be used as an evaluation indicator for negative sample. It shall be noted that the quotas for triggering emergency extinguishing and emergency annealing will be described in the following. Different transmission resources are distributed to different types of users. Herein, the different transmission resources include but not limited to at least one of the following: the recommended congestion window, a size of the cache queue, a size of a starting transmission window, a flow priority level and so on. A group with best evaluation is taken as a recommended group Mo. The group Mo and an average wsnd transmission window size of the group are transmitted to a main control module of the TCPO. For a TCP control block of matched groups, a recommendation transmission window is added so as to facilitate selection of the transmission window.

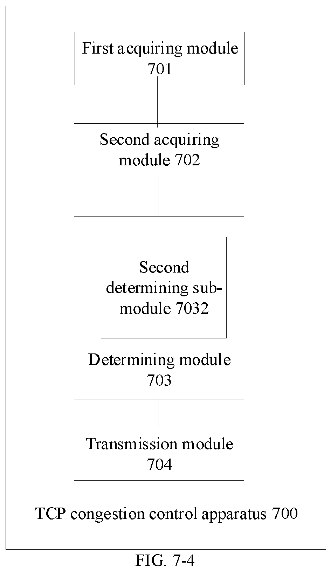

In some embodiments, as shown in FIG. 7-4, the determining module 703 includes: a second determining sub-module 7032 configured to acquire a core business indicator of each sample user to establish a deep learning model and perform deep learning model training, acquire a fitting function between the core business indicator and a network congestion or a fitting function between the core business indicator and a time delay exceeding a preset delay value, and determining the recommended congestion window corresponding to the user according to the fitting function and the key feature.

In some embodiments, M groups are obtained after performing the clustering algorithm on the sample users and then an N-layer deep learning model may be established. In this way, deep modeling training is performed on indicator data sampled in a period of time, where the input is a table of feature values of the M groups, and learning and training are performed by using positive and negative samples. An objective for this is to learn, through sample data, feature indicators and a fitting function Y that causes network congestion or excessive time delay. In this way, for a user flow in a similar condition, the recommended congestion window may be calculated through the fitting function Y, so as to transmit a data flow of an appropriate size. Compared with the method of performing initialization on the TCPO, then periodically transmitting the user key feature to NAP through another task thread, performing grouping determination and calculation by the NAP, periodically backfilling the recommended congestion windows of the groups for subsequent use by the TCPO, this method obtains the recommended congestion window of the user flow through the recommended congestion window model when the user flow requests the recommended congestion window calculation, which avoids impact of calculation of a recommended congestion model on performance of the TCPO.

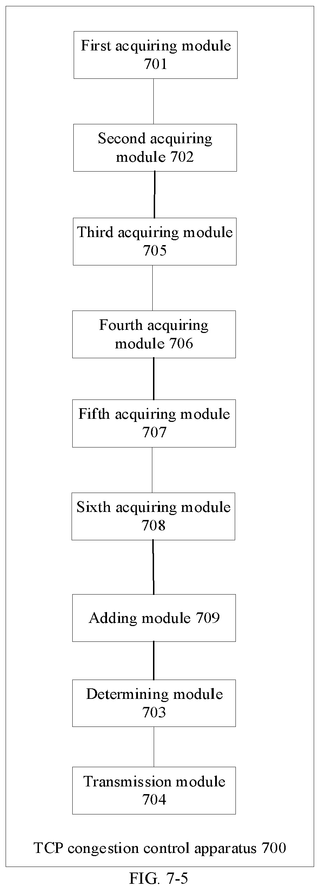

In some embodiments, as shown in FIG. 7-5, the TCP congestion control apparatus 700 further includes: a third acquiring module 705 configured to acquire an accumulated traffic of the user before the determining module determines the recommended congestion window of the TCP protocol layer control block according to the key feature; a fourth acquiring module 706 configured to acquire a current activity index of a TCP control block support flow corresponding to the user, if the accumulated traffic is greater than a preset accumulated traffic threshold; a fifth acquiring module 707 configured to acquire a hottest user list in a current system, if one current activity index greater than a preset activity threshold is available, where the hottest user list comprising a preset number of users corresponding to the largest congestion window, among users with the accumulated traffic exceeding the preset accumulated traffic threshold and the current activity index greater than a preset activity index in the current system; a sixth acquiring module 708 configured to acquire smallest congestion windows corresponding to respective users in the hottest user list, if the user is not in the hottest user list; and an adding module 709 configured to add the user to the hottest user list if a current congestion window of the user is greater than the smallest congestion window.

It shall be noted that the preset accumulated traffic threshold may be determined according to a practical requirement of those skilled in the art and thus will not be limited to the above.

It shall be noted that the details of making comparison according to the set threshold is common knowledge of those skilled in the art, and being equal to the preset threshold may be taken as a condition for implementing a following step. For example, in this embodiment, the condition may further be: acquiring the current activity index of the TCP control block support flow corresponding to the user, if the accumulated traffic is equal to the preset accumulated traffic threshold. In order to avoid unnecessary repetition in the present disclosure, no further example is listed herein.

In some embodiments, acquiring a user's accumulated traffic may be understood as acquiring an accumulated traffic of all TCP flow request messages of the user.

It shall be noted that the current congestion window of the user may be a congestion window obtained when the latest data packet of the cache queue is received by the user but before the recommended congestion window is acquired by the user.

It shall be noted that after the user is added to the hottest user list, the last user in the hottest user list will be removed from the hottest user list. That is, the user will replace a user with the smallest congestion window.

It shall be noted that when there are multiple flows for the user, the user's current congestion window is equal to a sum of congestion windows each corresponding to one of the flows. For example, a current hottest user list includes user 1 and user 2. The user 1 has flow A and flow B, while the user 2 has flow C. Herein, the current congestion window of flow A is 5, the current congestion window of flow B is 8, and the current congestion window of flow C is 9. As a result, the current congestion window of user 1 is 13 (as obtained by 5+8), the current congestion window of the user 2 is 9, and thus a smallest congestion window corresponding to each user in the hottest user list is 9. A current user 3 is not in the hottest user list, an accumulated traffic of the user 3 is greater than the preset accumulated traffic threshold, and a current activity index of the user 3 is greater than the preset activity threshold. Thus, the current congestion window of the user 3 is 10. At this time, the current congestion window of the user 3 is greater than the smallest congestion window, and the user 2 is replaced with the user 3 in the hottest user list.

In some embodiments, as shown in FIG. 9-1, a fourth acquiring module 506 further includes: a first sub-module 5061 of the fourth acquiring module configured to an activity index last time reported and time when the activity index was reported last time upon receiving an ack acknowledgement; a first activity index determining module 5062 configured to make the current activity index equal to a sum of the activity index last time reported plus a linear accumulated value, if the current congestion window is greater than a preset congestion window, a time interval from the current time to the time when the activity index was reported last time is greater than a preset time interval, and the activity index last time reported is less than a maximum activity index.

It shall be noted that the preset time interval is configured for distinguishing whether the transmission is in or not in a continuous transmission state. Considering an effect of the time delay ack, the preset time interval may be 3 times an average RTT, or may be set by those skilled in the art.

It shall be noted that a value of the preset congestion window may be set by those skilled in the art according to an actual requirement. The preset congestion window is configured to reduce calculation and filter out small flow transmissions.

It shall be noted that an excessively large activity index would make the current flow impossible to reflect the latest speed reduction in time, so there is usually a limit on a maximum activity index thereof, which may limit unreasonable increase in the current activity index. The maximum activity index may be set by those skilled in the art according to an actual requirement or experience.

It shall be noted that the linear accumulated value may further be set by those skilled in the art according to an actual requirement or experience. The linear accumulated value is a positive number.

In some embodiments, as shown in FIG. 9-2, the fourth acquiring module 506 further includes: a second activity index determining module 5063 configured for make the current activity index equal to an initial activity index if the activity index reported last time fails to be acquired, when receiving the ack acknowledgement.

It shall be noted that if the activity index reported last time fails to be acquired, generally, the user has not received the data packet of the cache queue. Thus, the congestion window of the user is still an initial congestion window. At this time, the current activity index of the current is equal to the initial activity index. Herein, the initial activity index may be set by those skilled in the art based on the actual requirement or experience.

In some embodiments, the initial activity index is equal to 1, the linear accumulated value is equal to 1 and the maximum activity index is equal to 10. It shall be noted that those skilled in the art may set the initial activity index as a negative number or another positive number. The other linear accumulated values and maximum activity indices are modified based on a corresponding logic.

In some embodiments, the value of the activity index reflects a traffic activity of the current flow. The activity index may be used as an identification in a following user classification, an index collection and a system control. By classifying the activity indices into different levels, a reverse traffic control at a system level may be performed on flows of the same type in the entire system. In some embodiments, the value of the current activity index ranges from 1 to 9 in which a mechanism of "linear increments and punitive decrements" is applied, which may reflect an activity condition of the flow and provides good feedback to initiative speed reduction of the flow. Generally, when the congestion window is reduced, a bottle neck appears at a UE side network, initiative slowdown by way of penalty is adopted to obtain a concave function curve. Thus, the flow usually does not become active soon. An excessively large current activity index would result in that a recent slowdown cannot be fed back quickly to the current flow. Therefore, the current activity index is generally set as less than 10 to obtain a good effect. In addition, it would be a waste of performance to calculate the current activity index for an excessively small flow, which is useless. In addition, it would be useless to calculate the current activity index for a flow with excessively large time delay. According to a conventional TCP congestion algorithm, a flow with excessively large time delay does not speed up continuously. Specifically, if the flow is in session persistence, i.e., no data is transmitted temporarily but the flow still exists, and the window is large, the algorithm may be well applied to the condition. Due to the preset time interval, activity of the flow will maintain at a high level but does not continue to grow. Once the user continues to access to the Internet, the user may be quickly identified and treated as a highly active user. In conclusion, the algorithm may apply to most scenarios, and the amount of calculation is very small so that the performance of the original system will not be affected. Besides, the algorithm classifies users according to active levels, providing a means for subsequent reverse control of an overall system traffic.

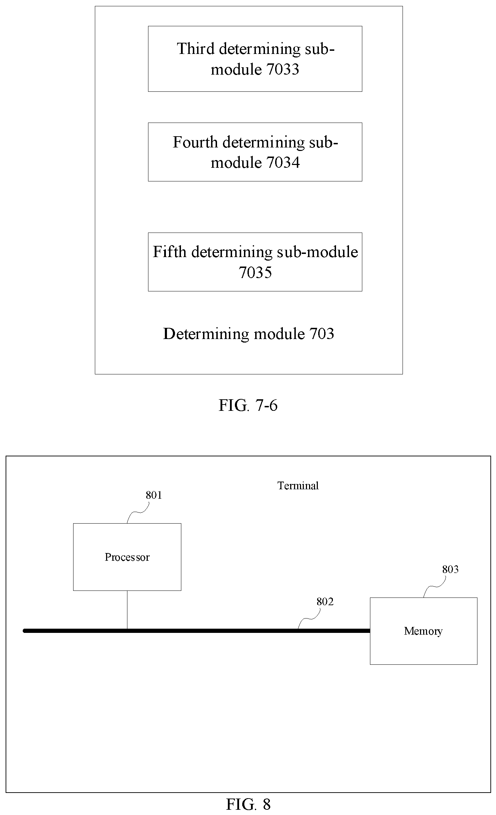

In some embodiments, as shown in FIG. 7-6, the determining module 703 includes:
a third determining sub-module 7033 configured to acquire the current activity of the flow of the user, acquiring a load of the current system, if the user is in the hottest user list; if an annealing quota is achieved, make the recommended congestion window smaller than or equal to the current congestion window, wherein, the annealing quota comprises: the load being greater than a first preset threshold and less than a second preset load, one current activity being greater than the activity threshold, and the current congestion window of the user being greater than a standard window, the standard window comprising an average value of the current congestion windows of the users in the hottest user list in the system within a preset time period;
   and/or
a fourth determining sub-module 7034 configured to acquire the current activity of the flow of the user and acquire the load of the current system, if the user is in the hottest user list; if an extinguishing quota is achieved, make the recommended congestion window smaller than the current congestion window; the extinguishing quota comprising: the load being greater than a second preset threshold, and the current congestion window of the user being greater than the standard window; and the standard window comprising the average value of the current congestion window of the user in the hottest user list in the system within the preset time period;
   and/or
a fifth determining sub-module 7035 configured to acquire the load of the current system, and if the load is less than the third preset threshold and the user is new, make the recommended congestion window equal to the standard window multiplied by a third preset proportion, the standard window comprising the average value of the current congestion window of the user in the hottest user list in the system within the preset time period.

It shall be noted that if the annealing quota is achieved, the recommended congestion window may be equal to the current congestion window or may be equal to the current congestion window multiplied by a first preset proportion. Herein, the first preset proportion is more than 0 and less than 1. A value of the first preset proportion may be set by the user or those skilled in the art per se and is not limited herein.

It shall be noted that in some embodiments, the hottest user list is a list to be updated in real time. When a system is started, the user flow needs to report a phone number, a source IP, or the congestion window. If the user flow reports the phone number, the congestion window corresponding to the user is an accumulated sum of congestion windows of all flows corresponding to the user.

It shall be noted that each time the user receives a message acknowledgement ACK, the user would report it to a shared memory region. If the congestion window corresponding to the user is greater than the smallest congestion window among the congestion windows corresponding to the users in the hottest user list, the user is added to the hottest user list by replaces the user with the smallest congestion window in the hottest user list. It may be appreciated that the hottest user list is a list of a number of users having large congestion windows within a time period. A TCPtimer regular reporting mechanism is set. A reporting period is 100 times the average rtt, and if no message is received within 100rtt, a list record will be initiatively cleared to guarantee update of the list list. In this algorithm, a user having the largest sliding window in the system is added to the list through self-inspection each time a message acknowledge ACK is received, so that a global control body stores a sample of a standard window for the traffic of the user continuously accessing to the Internet during a short period of time of the current system, i.e., dw. A regular cleaning mechanism much greater than rtt reduces start resources of the timer. A mechanism in which the active flow automatically makes declaration in the ack process significantly reduces system loss of training all flows in rotation. Generally, active flows is only a small part of all flows, and are not updated unless when being active, thereby reducing pressure on the system caused by synchronous updates. Existence of the hottest user list may reflect traffic usage of users with large traffic in the system, and is an important monitoring target in traffic management.

It shall be noted that the window shall be reduced when the extinguishing quota is achieved. At this time, the recommended congestion window is equal to the current congestion window multiplied by a second preset proportion. Herein the second preset proportion is more than 0 and less than 1, and a value of the second preset proportion may be set by the user or those skilled in the art per se and is not limited herein.

It shall be noted that a total traffic of the system is changing constantly, but a user sample with high traffic for the latest period of time may reflect a volume of the current traffic and may be taken as a basis for calculation. In this embodiment, on the basis of the original system, a low consumption and low cost manner is adopted to obtain sample data of users with high traffic as dynamic traffic reduction. This does not affect Internet accessing of a new user. Partial network concession may be pertinently performed on a user that constantly occupies the network for long time, which is in conformity to equality principles of TCP.

It shall be noted that the third preset threshold is smaller than the first preset threshold and the second preset threshold.

It shall be noted that a new user may be a user to whom the data packet of the cache queue is not sent after the user is accessed and initiates a TCP flow request message, and the TCPO accepts the request and requests the ISP for a resource, and then the TCPO acquires the ISP resource and cache the ISP resource into the cache queue. Alternatively, it may be appreciated that the user is one that has not received the data packet of the cache queue.

It shall be noted that the third preset proportion is more than 0 and less than 1, and a value of the third preset proportion may be set by the user or those skilled in the art per se, for example, 50%.

In some embodiments, for the new user, an appropriate recommended congestion window may be directly acquired through the recommended congestion window and the fitting function. The initial congestion window may be taken as the recommended congestion window for the new user. It shall be noted that when the load of the system is less than the third preset threshold, a value of the initial congestion window may be set reasonably large to prevent data packet transmission from a long acceleration period while starting slow acceleration.

In some embodiments, the negative-incentive signal includes but not limited to at least one of the following: a triggered network congestion, a packet loss, acks repeated twice, transmission time delay, achieving the annealing quota, and achieving the extinguishing quota.

In some embodiments, the current hottest user list in the system may be acquired by establishing a shared storage hash table. When the user receives the data packet, the user's traffic and a size of the current transmission window are reported, and the activity is calculated according to a traffic activity algorithm. The activity algorithm involves the continuous transmission in a rising or falling range, and weight setting of the transmission window and an initial valve ratio. A purpose thereof is to record a relatively active user traffic and transmission window for a current period of time for necessary reference information for the system upon emergency annealing. Besides, an impact of system performance is considered. Herein, only some relatively active users rather than all users are recorded.

In some embodiments, after determining the recommended congestion window, a notification window of a reception terminal may further be acquired. It shall be noted that the congestion window is used by a transmitter for traffic control, while the notification window is used by a receiver for traffic control. After the notification window is acquired, the smaller one of the recommended congestion window and the notification window is taken as an upper limit of transmission.

The present disclosure provides a TCP congestion control apparatus. The TCP congestion control apparatus acquires a key feature of a user when an ISP resource generated according to a TCP flow request message of the user is acquired and cached into a cache queue, determines a recommended congestion window of a TCP protocol layer control block according to the key feature, and transmits a data packet of the cache queue to the user according to the principle of sliding window. Accordingly, a corresponding recommended congestion window is distributed according to a key feature of each user. As a result, there is no uniform standard for providing a corresponding recommended congestion window for different users. In this way, a resource available to an effective user and user experience are promoted.

This embodiment further provides a terminal, as shown in FIG. 8, the terminal includes: a processor 801, a memory 803 and a communication bus 802. Herein,
the communication bus 802 is configured to implement connection communication between the processor 801 and the memory 803; and
the processor 801 is configured to execute one or more computer programs stored in the memory 803 to implement at least one of the steps of the TCP congestion control method according to the above embodiments.

This embodiment further provides a computer readable storage medium including a volatile or non-volatile, removable or irremovable medium implemented in any method or technology applied to storage information (such as a computer readable instruction, a data structure, a computer program module or other data). The computer readable storage medium includes but not limited to a random access memory (RAM), a read-only memory (ROM), an electrically erasable programmable read only memory (EEPROM), a flash memory or other memory technology, a compact disc read-only memory (CD-ROM), a digital versatile disc (DVD) or another optical disc memory, magnetic box, magnetic tape, magnetic disc or another magnetic storage apparatus, or any other medium applicable to storing expected information and accessible by a computer.

The computer readable storage medium may be configured to store one or more computer programs executable by a processor to implement at least one step of the TCP congestion control method in the above embodiments.

This embodiment further provides a computer program (or computer software). The computer program can be distributed on a computer-readable medium and executed by a computable device to implement at least one step of event processing methods in the foregoing embodiments. In some cases, at least one step shown or described can be performed in a different order than described in the foregoing embodiments.

It should be understood that, in some cases, at least one of the steps shown or described may be performed in an order different than that described in the foregoing embodiments.

This embodiment also provides a computer program product, including a computer-readable device storing the computer program as shown above. The computer-readable device in this embodiment may include the computer-readable storage medium as shown above.

It can be seen that those skilled in the art shall understand that all or some of the steps in the method disclosed above and the functional modules/units in the system and the device can be implemented as software (which can be implemented by a computer program code executable by a computing device), firmware, hardware and an appropriate combination thereof. In the hardware implementation, division between functional modules/units mentioned in the above description does not necessarily correspond to division of physical components. For example, one physical component may have multiple functions, or one function or step may by implemented by several physical components. Some physical components or all physical components may be implemented as software implemented by a processor, such as a central processing unit, a digital signal processor, or a microprocessor, or may be implemented as hardware, or may be implemented as an integrated circuit, for example, an application specific integrated circuit.

The present invention provides a TCP congestion control method and apparatus, a terminal and a readable storage medium. The TCP congestion control method includes: acquiring a key feature of a user flow, acquiring an ISP resource generated according to a TCP flow request message of the user into a cache queue, determining a recommended congestion window of a TCP protocol layer control block according to the key feature, and transmitting a data packet of the cache queue to the user according to the principle of sliding window. Accordingly, a corresponding recommended congestion window is distributed according to a key feature of each user. As a result, there is no uniform standard for providing a corresponding recommended congestion window for different users. In this way, a resource available to an effective user and user experience are promoted.

In addition, as is well known to those of ordinary skill in the art, communication media usually contain computer-readable instructions, data structures, computer program modules, or other data in a modulated data signal such as carrier waves or other transmission mechanisms, and may include any information delivery medium. Therefore, this application is not limited to any specific combination of hardware and software.

## Claims

1. A Transmission Control Protocol, called TCP, congestion control method applied to a Transmission Control Protocol proxy and Optimization, called TCPO, network unit, comprising:
acquiring a key feature of a user flow;
acquiring an Internet Service Provider, called ISP, resource and caching the acquired ISP resource into a cache queue, wherein the ISP resource is generated according to a TCP flow request message of the user;
determining a recommended congestion window of a TCP protocol layer control block according to the key feature; and
transmitting the ISP resource cached in the cache queue in a form of data packet to the user according to a principle of sliding window and the determined recommended congestion window,
wherein before determining the recommended congestion window of the TCP protocol layer control block according to the key feature, the method further comprises steps of:
acquiring an accumulated traffic of the user, wherein the accumulated traffic of the user is accumulated traffic of all TCP flow request messages of the user;
acquiring an activity index of a current flow supported by a TCP control block corresponding to the user, if the accumulated traffic is greater than a preset accumulated traffic threshold;
if one current activity index greater than a preset activity threshold is available, acquiring a hottest user list in a current system, the hottest user list comprising a preset number of users in the current system, wherein for each of the users comprised in the hottest user list, the accumulated traffic exceeds the preset accumulated traffic threshold and the activity index of the current flow is greater than a preset activity index;
if the user is not in the hottest user list, acquiring smallest congestion windows corresponding to respective users in the hottest user list; and
if a current congestion window of the user is greater than the smallest congestion window, adding the user to the hottest user list.

2. The TCP congestion control method according to claim 1, wherein determining the recommended congestion window of the TCP protocol layer control block according to the key feature comprises:
establishing a model of the recommended congestion window which comprises groups for users and recommended congestion windows each corresponding to one of the groups, and determining the recommended congestion window corresponding to the user according to the group of the user determined in accordance with the key feature; or
acquiring core business indicators of sample users to establish a deep learning model and perform deep learning model training, acquiring a fitting function between the core business indicator and a network congestion or a fitting function between the core business indicator and a time delay exceeding a preset delay value, and determining the recommended congestion window corresponding to the user according to the fitting function and the key feature.

3. The TCP congestion control method according to claim 2, wherein establishing a model of the recommended congestion window which comprises groups for users and recommended congestion windows each corresponding to one of the groups, and determining the recommended congestion window corresponding to the user according to the group of the user determined in accordance with the key feature, further comprises:
acquiring the core business indicator of each sample user;
processing the core business indicator with a clustering algorithm to obtain preliminary groups for users and preliminary recommended congestion windows each corresponding to one of the preliminary groups;
acquiring a negative-incentive signal generated when a user in each of the preliminary groups and performing a TCPO business procedure according to a corresponding preliminary recommended congestion window; and
re-determining groups for the sample users and the recommended congestion windows each corresponding to one of the groups by taking the negative-incentive signal as a negative sample examination index.

4. The TCP congestion control method according to claim 1, wherein acquiring the activity index of the current flow supported by the TCP control block corresponding to the user comprises:
when receiving an ack acknowledgement, acquiring an activity index last time reported and time when the activity index was reported last time;
making the current activity index equal to a sum of the activity index last time reported plus a linear accumulated value, if the current congestion window is greater than a preset congestion window, a time interval from the current time to the time when the activity index was reported last time is greater than a preset time interval, and the activity index last time reported is less than a maximum activity index;
or
when receiving the ack acknowledgement, making the current activity index equal to an initial activity index if the activity index reported last time fails to be acquired.

5. The TCP congestion control method according to claim 4, wherein
the maximum activity index is equal to 10, if the initial activity index is equal to 1 and the linear accumulated value is equal to 1.

6. The TCP congestion control method according to claim 1, wherein the step of determining the recommended congestion window of the TCP protocol layer control block according to the key feature comprises:
if the user is in the hottest user list, acquiring the activity index of the current flow of the user and acquiring a load of the current system;
if an annealing quota is achieved, making the recommended congestion window smaller than or equal to the current congestion window, wherein the annealing quota comprises: the load being greater than a first preset threshold and less than a second preset load, one current activity index being greater than the preset activity threshold, and the current congestion window of the user being greater than a standard window, the standard window comprising an average value of the current congestion windows of the users in the hottest user list in the system within a preset time period;
or
if the user is in the hottest user list, acquiring the activity index of the current flow of the user and acquiring the load of the current system,
if an extinguishing quota is achieved, making the recommended congestion window smaller than the current congestion window, wherein the extinguishing quota comprising: the load being greater than a second preset threshold, and the current congestion window of the user being greater than the standard window, the standard window comprising the average value of the current congestion window of the user in the hottest user list in the system within the preset time period;
or
acquiring the load of the current system, and
if the load is less than the third preset threshold and the user is new, making the recommended congestion window equal to the standard window multiplied by a preset proportion, the standard window comprising the average value of the current congestion windows of the users in the hottest user list in the system within the preset time period.

7. The TCP congestion control method according to claim 6, wherein the negative-incentive signal comprises at least one of the following:
a triggered network congestion, a packet loss, acks repeated twice, transmission time delay, achieving the annealing quota, and achieving the extinguishing quota.

8. A Transmission Control Protocol, called TCP, congestion control apparatus applied to a Transmission Control Protocol proxy and Optimization, called TCPO, network unit, comprising:
a first acquiring module configured to acquire a key feature of a user flow;
a second acquiring module configured to acquire an Internet Service Provider, called ISP, resource and cache the acquired ISP resource into a cache queue, wherein the ISP resource is generated according to a TCP flow request message of the user;
a third acquiring module configured to acquire an accumulated traffic of the user, wherein the accumulated traffic of the user is accumulated traffic of all TCP flow request messages of the user;
a fourth acquiring module configured to acquire an activity index of a current flow supported by a TCP control block corresponding to the user, if the accumulated traffic is greater than a preset accumulated traffic threshold;
a fifth acquiring module configured to acquire a hottest user list in a current system if one current activity index greater than a preset activity threshold is available, the hottest user list comprising a preset number of users in the current system, wherein for each of the users comprised in the hottest user list, the accumulated traffic exceeds the preset accumulated traffic threshold and the activity index of the current flow is greater than a preset activity index;
a sixth acquiring module, configured to acquire smallest congestion windows corresponding to respective users in the hottest user list, if the user is not in the hottest user list;
an adding module configured to add the user to the hottest user list if a current congestion window of the user is greater than the smallest congestion window;
a determining module configured to determine a recommended congestion window of a TCP protocol layer control block according to the key feature; and
a transmission module configured to transmit the ISP resource cached in the cache queue in a form of data packet to the user according to a principle of sliding window and the determined recommended congestion window.

9. The TCP congestion control apparatus according to claim 8, wherein the determining module comprises:
a first determining sub-module configured to establish a model of the recommended congestion window which comprises groups for users and recommended congestion windows each corresponding to one of the groups, and determining the recommended congestion window corresponding to the user according to the group of the user determined in accordance with the key feature; or
a second determining sub-module configured to acquire core business indicators of sample users to establish a deep learning model and perform deep learning model training, acquiring a fitting function between the core business indicator and a network congestion or a fitting function between the core business indicator and a time delay exceeding a preset delay value, and determining the recommended congestion window corresponding to the user according to the fitting function and the key feature.

10. The TCP congestion control apparatus according to claim 9, wherein the first determining sub-module further comprises:
a sample acquiring module configured to acquire the core business indicator of each sample user;
a clustering algorithm module configured to process the core business indicator with a clustering algorithm to obtain preliminary groups for users and preliminary recommended congestion windows each corresponding to one of the preliminary groups;
a negative-incentive signal acquiring module configured to acquire a negative-incentive signal generated when a user in each of the preliminary groups and perform a TCPO business procedure according to a corresponding preliminary recommended congestion window; and
a re-determining module configured to re-determine groups for the sample users and the recommended congestion windows each corresponding to one of the groups by taking the negative-incentive signal as a negative sample examination index.

11. The TCP congestion control apparatus according to claim 8, wherein the fourth acquiring module further comprises:
a first sub-module of the fourth acquiring module configured to acquire an activity index last time reported and time when the activity index was reported last time, upon receiving an ack acknowledgement;
a first activity index determining module configured to make the current activity index equal to a sum of the activity index last time reported plus a linear accumulated value, if the current congestion window is greater than a preset congestion window, a time interval from the current time to the time when the activity index was reported last time is greater than a preset time interval, and the activity index last time reported is less than a maximum activity index;
a second activity index determining module configured to make the current activity index equal to an initial activity index if the activity index reported last time fails to be acquired, when receiving the ack acknowledgement.

12. A terminal, comprising a processor, a memory and a communication bus;
wherein, the communication bus is configured to implement connection communication between the processor and the memory; and the processor is configured to execute one or more computer programs stored in the memory so as to implement the TCP congestion control method according to any one of claims 1 to 7.

13. A computer readable storage medium storing one or more computer programs therein, wherein the computer programs are executable by one or more processors to implement the TCP congestion control method according to any one of claims 1 to 7.

## Patentansprüche

1. Übertragungssteuerprotokoll- (TCP) Überlastungssteuerungsverfahren, das auf eine Übertragungssteuerprotokoll-Proxy- und Optimierungs- (TCPO) Netzwerkeinheit angewendet wird, umfassend:
Erfassen eines Schlüsselmerkmals eines Benutzerflusses;
Erfassen einer Internetdienstanbieter- (ISP) Ressource und Zwischenspeichern der erfassten ISP-Ressource in einer Zwischenspeicherwarteschlange, wobei die ISP-Ressource gemäß einer TCP-Flussanforderungsnachricht des Benutzers erzeugt wird;
Bestimmen eines empfohlenen Überlastungsfensters eines TCP-Protokollschicht-Steuerblocks gemäß dem Schlüsselmerkmal; und
Übertragen der in der Zwischenspeicherwarteschlange zwischengespeicherten ISP-Ressource in Form eines Datenpakets an den Benutzer gemäß einem Gleitfensterprinzip und dem bestimmten empfohlenen Überlastungsfenster,
wobei das Verfahren vor dem Bestimmen des empfohlenen Überlastungsfensters des TCP-Protokollschicht-Steuerungsblocks gemäß dem Schlüsselmerkmal ferner die folgenden Schritte umfasst:
Erfassen eines akkumulierten Verkehrs des Benutzers, wobei der akkumulierte Verkehr des Benutzers der akkumulierte Verkehr aller TCP-Flussanforderungsnachrichten des Benutzers ist;
Erfassen eines Aktivitätsindexes eines aktuellen Flusses, der von einem TCP-Steuerblock unterstützt wird, der dem Benutzer entspricht, wenn der akkumulierte Verkehr größer als ein voreingestellter Schwellenwert für den akkumulierten Verkehr ist;
wenn ein aktueller Aktivitätsindex, der größer als ein voreingestellter Aktivitätsschwellenwert ist, verfügbar ist, Erfassen einer Liste der angesagtesten Benutzer in einem aktuellen System, wobei die Liste der angesagtesten Benutzer eine voreingestellte Anzahl von Benutzern in dem aktuellen System umfasst, wobei für jeden der Benutzer, die in der Liste der angesagtesten Benutzer enthalten sind, der akkumulierte Verkehr den voreingestellten Schwellenwert für den akkumulierten Verkehr überschreitet und der Aktivitätsindex des aktuellen Flusses größer als ein voreingestellter Aktivitätsindex ist;
wenn der Benutzer nicht in der Liste der angesagtesten Benutzer ist, Erfassen der kleinsten Überlastungsfenster, die den jeweiligen Benutzern in der Liste der angesagtesten Benutzer entsprechen; und
wenn ein aktuelles Überlastungsfenster des Benutzers größer als das kleinste Überlastungsfenster ist, Hinzufügen des Benutzers zu der Liste der angesagtesten Benutzer.

2. TCP-Überlastungssteuerungsverfahren nach Anspruch 1, wobei das Bestimmen des empfohlenen Überlastungsfensters des TCP-Protokollschicht-Steuerblocks gemäß dem Schlüsselmerkmal Folgendes umfasst:
Herstellen eines Modells des empfohlenen Überlastungsfensters, das Gruppen für Benutzer und empfohlene Überlastungsfenster, die jeweils einer der Gruppen entsprechen, umfasst, und Bestimmen des empfohlenen Überlastungsfensters, das dem Benutzer entspricht, gemäß der Gruppe des Benutzers, die gemäß dem Schlüsselmerkmal bestimmt wird; oder
Erfassen von Kerngeschäftsindikatoren von Musterbenutzern, um ein Deep-Learning-Modell herzustellen und ein Deep-Learning-Modelltraining durchzuführen, Erfassen einer Anpassungsfunktion zwischen dem Kerngeschäftsindikator und einer Netzwerküberlastung oder einer Anpassungsfunktion zwischen dem Kerngeschäftsindikator und einer Zeitverzögerung, die einen voreingestellten Verzögerungswert überschreitet, und Bestimmen des empfohlenen Überlastungsfensters, das dem Benutzer entspricht, gemäß der Anpassungsfunktion und dem Schlüsselmerkmal.

3. TCP-Überlastungssteuerungsverfahren nach Anspruch 2, wobei das Herstellen eines Modells des empfohlenen Überlastungsfensters, das Gruppen für Benutzer und empfohlene Überlastungsfenster, die jeweils einer der Gruppen entsprechen, umfasst, und das Bestimmen des empfohlenen Überlastungsfensters, das dem Benutzer entspricht, gemäß der Gruppe des Benutzers, die gemäß dem Schlüsselmerkmal bestimmt wird, ferner Folgendes umfasst:
Erfassen des Kerngeschäftsindikators jedes Musterbenutzers;
Verarbeiten des Kerngeschäftsindikators mit einem Cluster-Algorithmus, um vorläufige Gruppen für Benutzer und vorläufige empfohlene Überlastungsfenster, die jeweils einer der vorläufigen Gruppen entsprechen, zu erhalten;
Erfassen eines Negativanreizsignals, das erzeugt wird, wenn sich ein Benutzer in jeder der vorläufigen Gruppen befindet, und Durchführen eines TCPO-Geschäftsprozesses gemäß einem entsprechenden vorläufigen empfohlenen Überlastungsfenster; und
Neubestimmen von Gruppen für die Musterbenutzer und der empfohlenen Überlastungsfenster, die jeweils einer der Gruppen entsprechen, durch Verwenden des Negativanreizsignals als einen Negativmusteruntersuchungsindex.

4. TCP-Überlastungssteuerungsverfahren nach Anspruch 1, wobei das Erfassen des Aktivitätsindexes des aktuellen Flusses, der von dem TCP-Steuerblock unterstützt wird, der dem Benutzer entspricht, Folgendes umfasst:
beim Empfangen einer ACK-Bestätigung, Erfassen eines zuletzt gemeldeten Aktivitätsindexes und einer Zeit, zu der der Aktivitätsindex zuletzt gemeldet wurde;
Erstellen des aktuellen Aktivitätsindexes gleich einer Summe des zuletzt gemeldeten Aktivitätsindexes plus eines linearen akkumulierten Wertes, wenn das aktuelle Überlastungsfenster größer als ein voreingestelltes Überlastungsfenster ist, ein Zeitintervall von der aktuellen Zeit bis zu der Zeit, zu der der Aktivitätsindex zuletzt gemeldet wurde, größer als ein voreingestelltes Zeitintervall ist und der zuletzt gemeldete Aktivitätsindex kleiner als ein maximaler Aktivitätsindex ist;
oder
beim Empfangen der ACK-Bestätigung, Erstellen des aktuellen Aktivitätsindexes gleich einem anfänglichen Aktivitätsindex, wenn der zuletzt gemeldete Aktivitätsindex nicht erfasst wird.

5. TCP-Überlastungssteuerungsverfahren nach Anspruch 4, wobei
der maximale Aktivitätsindex gleich 10 ist, wenn der anfängliche Aktivitätsindex gleich 1 ist und der lineare akkumulierte Wert gleich 1 ist.

6. TCP-Überlastungssteuerungsverfahren nach Anspruch 1, wobei der Schritt des Bestimmens des empfohlenen Überlastungsfensters des TCP-Protokollschicht-Steuerblocks gemäß dem Schlüsselmerkmal Folgendes umfasst:
wenn sich der Benutzer in der Liste der angesagtesten Benutzer befindet, Erfassen des Aktivitätsindex des aktuellen Flusses des Benutzers und Erfassen einer Last des aktuellen Systems;
wenn eine Konditionierungsquote erreicht wird, Erstellen des empfohlenen Überlastungsfensters kleiner als oder gleich dem aktuellen Überlastungsfenster, wobei die Konditionierungsquote Folgendes umfasst: die Last ist größer als ein erster voreingestellter Schwellenwert und kleiner als eine zweite voreingestellte Last, ein aktueller Aktivitätsindex ist größer als der voreingestellte Aktivitätsschwellenwert und das aktuelle Überlastungsfenster des Benutzers ist größer als ein Standardfenster, wobei das Standardfenster einen Mittelwert der aktuellen Überlastungsfenster der Benutzer in der Liste der angesagtesten Benutzer in dem System innerhalb einer voreingestellten Zeitspanne umfasst;
oder
wenn sich der Benutzer in der Liste der angesagtesten Benutzer befindet, Erfassen des Aktivitätsindex des aktuellen Flusses des Benutzers und Erfassen der Last des aktuellen Systems,
wenn eine Löschungsquote erreicht wird, Erstellen des empfohlenen Überlastungsfensters kleiner als das aktuelle Überlastungsfenster, wobei die Löschungsquote Folgendes umfasst: die Last ist größer als ein zweiter voreingestellter Schwellenwert und das aktuelle Überlastungsfenster des Benutzers ist größer als das Standardfenster, wobei das Standardfenster den Mittelwert des aktuellen Überlastungsfensters des Benutzers in der Liste der angesagtesten Benutzer in dem System innerhalb der voreingestellten Zeitspanne umfasst;
oder
Erfassen der Last des aktuellen Systems, und
wenn die Last kleiner als der dritte voreingestellte Schwellenwert ist und der Benutzer neu ist, Erstellen des empfohlenen Überlastungsfensters gleich dem Standardfenster multipliziert mit einem voreingestellten Verhältnis, wobei das Standardfenster den Mittelwert der aktuellen Überlastungsfenster der Benutzer in der Liste der angesagtesten Benutzer in dem System innerhalb der voreingestellten Zeitspanne umfasst.

7. TCP-Überlastungssteuerungsverfahren nach Anspruch 6, wobei das Negativanreizsignal mindestens eines der Folgenden umfasst:
eine ausgelöste Netzwerküberlastung, einen Paketverlust, eine zweimal wiederholte Übertragung, eine Übertragungszeitverzögerung, das Erreichen der Konditionierungsquote und das Erreichen der Löschungsquote.

8. Übertragungssteuerprotokoll- (TCP) Überlastungssteuerungsvorrichtung, die auf eine Übertragungssteuerprotokoll-Proxy- und Optimierungs- (TCPO) Netzwerkeinheit angewendet wird, umfassend:
ein erstes Erfassungsmodul, das konfiguriert ist, um ein Schlüsselmerkmal eines Benutzerflusses zu erfassen;
ein zweites Erfassungsmodul, das konfiguriert ist, um eine Internetdienstanbieter-(ISP) Ressource zu erfassen und die erfasste ISP-Ressource in einer Zwischenspeicherwarteschlange zwischenzuspeichern, wobei die ISP-Ressource gemäß einer TCP-Flussanforderungsnachricht des Benutzers erzeugt wird;
ein drittes Erfassungsmodul, das konfiguriert ist, um einen akkumulierten Verkehr des Benutzers zu erfassen, wobei der akkumulierte Verkehr des Benutzers der akkumulierte Verkehr aller TCP-Flussanforderungsnachrichten des Benutzers ist;
ein viertes Erfassungsmodul, das konfiguriert ist, um einen Aktivitätsindex eines aktuellen Flusses zu erfassen, der von einem TCP-Steuerblock unterstützt wird, der dem Benutzer entspricht, wenn der akkumulierte Verkehr größer als ein voreingestellter Schwellenwert für den akkumulierten Verkehr ist;
ein fünftes Erfassungsmodul, das konfiguriert ist, um eine Liste der angesagtesten Benutzer in einem aktuellen System zu erfassen, wenn ein aktueller Aktivitätsindex, der größer als ein voreingestellter Aktivitätsschwellenwert ist, verfügbar ist, wobei die Liste der angesagtesten Benutzer eine voreingestellte Anzahl von Benutzern in dem aktuellen System umfasst, wobei für jeden der Benutzer, die in der Liste der angesagtesten Benutzer enthalten sind, der akkumulierte Verkehr den voreingestellten Schwellenwert für den akkumulierten Verkehr überschreitet und der Aktivitätsindex des aktuellen Flusses größer als ein voreingestellter Aktivitätsindex ist;
ein sechstes Erfassungsmodul, das konfiguriert ist, um die kleinsten Überlastungsfenster zu erfassen, die den jeweiligen Benutzern in der Liste der angesagtesten Benutzer entsprechen, wenn der Benutzer nicht in der Liste der angesagtesten Benutzer ist;
ein Hinzufügungsmodul, das konfiguriert ist, um den Benutzer zu der Liste der angesagtesten Benutzer hinzuzufügen, wenn ein aktuelles Überlastungsfenster des Benutzers größer als das kleinste Überlastungsfenster ist;
ein Bestimmungsmodul, das konfiguriert ist, um ein empfohlenes Überlastungsfenster eines TCP-Protokollschicht-Steuerblocks gemäß dem Schlüsselmerkmal zu bestimmen; und
ein Übertragungsmodul, das konfiguriert ist, um die in der Zwischenspeicherwarteschlange zwischengespeicherte ISP-Ressource in Form eines Datenpakets an den Benutzer gemäß einem Gleitfensterprinzip und dem bestimmten empfohlenen Überlastungsfenster zu übertragen.

9. TCP-Überlastungssteuerungsvorrichtung nach Anspruch 8, wobei das Bestimmungsmodul Folgendes umfasst:
ein erstes Bestimmungs-Teilmodul, das konfiguriert ist, um ein Modell des empfohlenen Überlastungsfensters, das Gruppen für Benutzer und empfohlene Überlastungsfenster, die j eweils einer der Gruppen entsprechen, umfasst, herzustellen und das empfohlene Überlastungsfenster, das dem Benutzer entspricht, gemäß der Gruppe des Benutzers, die gemäß dem Schlüsselmerkmal bestimmt wird, zu bestimmen; oder
ein zweites Bestimmungs-Teilmodul, das konfiguriert ist, um Kerngeschäftsindikatoren von Musterbenutzern zu erfassen, um ein Deep-Learning-Modell herzustellen und ein Deep-Learning-Modelltraining durchzuführen, eine Anpassungsfunktion zwischen dem Kerngeschäftsindikator und einer Netzwerküberlastung oder eine Anpassungsfunktion zwischen dem Kerngeschäftsindikator und einer Zeitverzögerung, die einen voreingestellten Verzögerungswert überschreitet, zu erfassen und das empfohlene Überlastungsfenster, das dem Benutzer entspricht, gemäß der Anpassungsfunktion und dem Schlüsselmerkmal zu bestimmen.

10. TCP-Überlastungssteuerungsvorrichtung nach Anspruch 9, wobei das erste Bestimmungs-Teilmodul ferner Folgendes umfasst:
ein Mustererfassungsmodul, das konfiguriert ist, um den Kerngeschäftsindikator jedes Musterbenutzers zu erfassen;
ein Cluster-Algorithmusmodul, das konfiguriert ist, um den Kerngeschäftsindikator mit einem Cluster-Algorithmus zu verarbeiten, um vorläufige Gruppen für Benutzer und vorläufige empfohlene Überlastungsfenster, die jeweils einer der vorläufigen Gruppen entsprechen, zu erhalten;
ein Negativanreizsignal-Erfassungsmodul, das konfiguriert ist, um ein Negativanreizsignal zu erfassen, das erzeugt wird, wenn sich ein Benutzer in jeder der vorläufigen Gruppen befindet, und einen TCPO-Geschäftsprozess gemäß einem entsprechenden vorläufigen empfohlenen Überlastungsfenster durchzuführen; und
ein Neubestimmungsmodul, das konfiguriert ist, um Gruppen für die Musterbenutzer und die empfohlenen Überlastungsfenster, die jeweils einer der Gruppen entsprechen, durch Verwenden des Negativanreizsignals als einen Negativmusteruntersuchungsindex neu zu bestimmen.

11. TCP-Überlastungssteuerungsvorrichtung nach Anspruch 8, wobei das vierte Erfassungsmodul ferner Folgendes umfasst:
ein erstes Teilmodul des vierten Erfassungsmoduls, das konfiguriert ist, um einen zuletzt gemeldeten Aktivitätsindex und eine Zeit, zu der der Aktivitätsindex zuletzt gemeldet wurde, beim Empfangen einer ACK-Bestätigung zu erfassen;
ein erstes Aktivitätsindex-Bestimmungsmodul, das konfiguriert ist, um den aktuellen Aktivitätsindex gleich einer Summe des zuletzt gemeldeten Aktivitätsindexes plus eines linearen akkumulierten Wertes zu erstellen, wenn das aktuelle Überlastungsfenster größer als ein voreingestelltes Überlastungsfenster ist, ein Zeitintervall von der aktuellen Zeit bis zu der Zeit, zu der der Aktivitätsindex zuletzt gemeldet wurde, größer als ein voreingestelltes Zeitintervall ist und der zuletzt gemeldete Aktivitätsindex kleiner als ein maximaler Aktivitätsindex ist;
ein zweites Aktivitätsindex-Bestimmungsmodul, das konfiguriert ist, um den aktuellen Aktivitätsindex gleich einem anfänglichen Aktivitätsindex zu erstellen, wenn der zuletzt gemeldete Aktivitätsindex nicht erfasst wird, beim Empfangen der ACK-Bestätigung.

12. Endgerät, das einen Prozessor, einen Speicher und einen Kommunikationsbus umfasst;
wobei der Kommunikationsbus konfiguriert ist, um eine Verbindungskommunikation zwischen dem Prozessor und dem Speicher zu implementieren; und der Prozessor konfiguriert ist, um ein oder mehrere Computerprogramme auszuführen, die in dem Speicher gespeichert sind, um das TCP-Überlastungssteuerungsverfahren nach einem der Ansprüche 1 bis 7 zu implementieren.

13. Computerlesbares Speichermedium, das ein oder mehrere Computerprogramme darin speichert, wobei die Computerprogramme durch einen oder mehrere Prozessoren ausführbar sind, um das TCP-Überlastungssteuerungsverfahren nach einem der Ansprüche 1 bis 7 zu implementieren.

## Revendications

1. Procédé de contrôle de congestion de protocole de contrôle de transmission (TCP) appliqué à une unité de réseau de proxy et d'optimisation de protocole de contrôle de transmission (TCPO) comprenant :
acquérir une caractéristique clé d'un flux d'utilisateur ;
acquérir une ressource de fournisseur de services Internet (ISP) et mettre en cache la ressource ISP acquise dans une file d'attente de cache, dans lequel la ressource ISP est générée conformément à un message de demande de flux TCP de l'utilisateur ;
déterminer une fenêtre de congestion recommandée d'un bloc de contrôle de couche de protocole TCP conformément à la caractéristique clé ; et
envoyer la ressource ISP mise en cache dans la file d'attente de cache sous la forme d'un paquet de données à l'utilisateur conformément à un principe de fenêtre glissante et à la fenêtre de congestion recommandée déterminée,
dans lequel, avant de déterminer la fenêtre de congestion recommandée du bloc de contrôle de couche de protocole TCP conformément à la caractéristique clé, le procédé comprend en outre les étapes consistant à :
acquérir un trafic accumulé de l'utilisateur, dans lequel le trafic accumulé de l'utilisateur est un trafic accumulé de tous les messages de demande de flux TCP de l'utilisateur ;
acquérir un indice d'activité d'un flux actuel supporté par un bloc de contrôle TCP correspondant à l'utilisateur, si le trafic accumulé est supérieur à un seuil de trafic accumulé prédéfini ;
si un indice d'activité actuel supérieur à un seuil d'activité prédéfini est disponible, acquérir une liste d'utilisateurs les plus chauds dans un système actuel, la liste d'utilisateurs les plus chauds comprenant un nombre prédéfini d'utilisateurs dans le système actuel, dans lequel, pour chacun des utilisateurs compris dans la liste d'utilisateurs les plus chauds, le trafic accumulé dépasse le seuil de trafic accumulé prédéfini et l'indice d'activité du flux actuel est supérieur à un indice d'activité prédéfini ;
si l'utilisateur ne figure pas dans la liste d'utilisateurs les plus branchés, acquérir les plus petites fenêtres de congestion correspondant aux utilisateurs respectifs dans la liste d'utilisateurs les plus branchés ; et
si une fenêtre de congestion actuelle de l'utilisateur est supérieure à la plus petite fenêtre de congestion, ajouter l'utilisateur à la liste d'utilisateurs les plus branchés.

2. Procédé de contrôle de congestion TCP selon la revendication 1, dans lequel déterminer la fenêtre de congestion recommandée du bloc de contrôle de couche de protocole TCP conformément à la caractéristique clé comprend :
établir un modèle de la fenêtre de congestion recommandée comprenant des groupes pour des utilisateurs et des fenêtres de congestion recommandées correspondant chacune à l'un des groupes, et déterminer la fenêtre de congestion recommandée correspondant à l'utilisateur conformément au groupe de l'utilisateur déterminé conformément à la caractéristique clé ; ou
acquérir des indicateurs opérationnels de base d'utilisateurs échantillons pour établir un modèle d'apprentissage profond et effectuer un apprentissage de modèle d'apprentissage profond, acquérir une fonction d'adaptation entre l'indicateur opérationnel de base et une congestion de réseau ou une fonction d'adaptation entre l'indicateur opérationnel de base et un temps de retard dépassant une valeur de retard prédéfinie, et déterminer la fenêtre de congestion recommandée correspondant à l'utilisateur conformément à la fonction d'adaptation et à la caractéristique clé.

3. Procédé de contrôle de congestion TCP selon la revendication 2, dans lequel établir un modèle de la fenêtre de congestion recommandée comprenant des groupes pour des utilisateurs et des fenêtres de congestion recommandées correspondant chacune à l'un des groupes, et déterminer la fenêtre de congestion recommandée correspondant à l'utilisateur conformément au groupe de l'utilisateur déterminé conformément à la caractéristique clé, comprend en outre :
acquérir l'indicateur opérationnel de base de chaque utilisateur échantillon ;
traiter l'indicateur opérationnel de base avec un algorithme de regroupement pour obtenir des groupes préliminaires pour des utilisateurs et des fenêtres de congestion recommandées préliminaires correspondant chacune à l'un des groupes préliminaires ;
acquérir un signal d'incitation négative généré lorsqu'un utilisateur dans chacun des groupes préliminaires et réaliser une procédure opérationnelle TCPO conformément à une fenêtre de congestion recommandée préliminaire correspondante ; et
redéterminer des groupes pour les utilisateurs échantillons et les fenêtres de congestion recommandées correspondant chacune à l'un des groupes en prenant le signal d'incitation négative comme indice d'examen d'échantillon négatif.

4. Procédé de contrôle de congestion TCP selon la revendication 1, dans lequel acquérir l'indice d'activité du flux actuel supporté par le bloc de contrôle TCP correspondant à l'utilisateur comprend :
lors de recevoir un accusé de réception, acquérir un indice d'activité rapporté la dernière fois et un moment où l'indice d'activité a été rapporté la dernière fois ;
faire en sorte que l'indice d'activité actuel soit égal à une somme de l'indice d'activité rapporté la dernière fois plus une valeur accumulée linéaire, si la fenêtre de congestion actuelle est supérieure à une fenêtre de congestion prédéfinie, un intervalle de temps entre le moment actuel et le moment où l'indice d'activité a été rapporté la dernière fois est supérieur à un intervalle de temps prédéfini, et l'indice d'activité rapporté la dernière fois est inférieur à un indice d'activité maximal ;
ou
lors de recevoir l'accusé de réception, faire en sorte que l'indice d'activité actuel soit égal à un indice d'activité initial si l'indice d'activité rapporté la dernière fois ne peut pas être acquis.

5. Procédé de contrôle de congestion TCP selon la revendication 4, dans lequel
l'indice d'activité maximal est égal à 10, si l'indice d'activité initial est égal à 1 et la valeur accumulée linéaire est égale à 1.

6. Procédé de contrôle de congestion TCP selon la revendication 1, dans lequel l'étape consistant à déterminer la fenêtre de congestion recommandée du bloc de contrôle de couche de protocole TCP conformément à la caractéristique clé comprend :
si l'utilisateur est dans la liste d'utilisateurs les plus branchés, acquérir l'indice d'activité du flux actuel de l'utilisateur et acquérir une charge du système actuel ;
si un quota de recuit est atteint, faire en sorte que la fenêtre de congestion recommandée soit inférieure ou égale à la fenêtre de congestion actuelle, dans lequel le quota de recuit comprend : la charge étant supérieure à un premier seuil prédéfini et inférieure à une seconde charge prédéfinie, un indice d'activité actuel étant supérieur au seuil d'activité prédéfini, et la fenêtre de congestion actuelle de l'utilisateur étant supérieure à une fenêtre standard, la fenêtre standard comprenant une valeur moyenne des fenêtres de congestion actuelles des utilisateurs dans la liste d'utilisateurs les plus branchés dans le système dans une période de temps prédéfinie ;
ou
si l'utilisateur est dans la liste d'utilisateurs les plus branchés, acquérir l'indice d'activité du flux actuel de l'utilisateur et acquérir la charge du système actuel,
si un quota d'extinction est atteint, faire en sorte que la fenêtre de congestion recommandée soit inférieure à la fenêtre de congestion actuelle, dans lequel le quota d'extinction comprend : la charge étant supérieure à un second seuil prédéfini, et la fenêtre de congestion actuelle de l'utilisateur étant supérieure à la fenêtre standard, la fenêtre standard comprenant la valeur moyenne de la fenêtre de congestion actuelle de l'utilisateur dans la liste d'utilisateurs les plus branchés dans le système dans la période de temps prédéfinie ;
ou
acquérir la charge du système actuel, et
si la charge est inférieure au troisième seuil prédéfini et que l'utilisateur est nouveau, faire en sorte que la fenêtre de congestion recommandée soit égale à la fenêtre standard multipliée par une proportion prédéfinie, la fenêtre standard comprenant la valeur moyenne des fenêtres de congestion actuelles des utilisateurs dans la liste d'utilisateurs les plus branchés dans le système dans la période de temps prédéfinie.

7. Procédé de contrôle de congestion TCP selon la revendication 6, dans lequel le signal d'incitation négative comprend au moins l'un des éléments suivants :
une congestion de réseau déclenchée, une perte de paquets, des ACK répétés deux fois, un temps de retard de transmission, accomplir le quota de recuit, et accomplir le quota d'extinction.

8. Appareil de contrôle de congestion de protocole de contrôle de transmission (TCP) appliqué à une unité de réseau de proxy et d'optimisation de protocole de contrôle de transmission (TCPO) comprenant :
un premier module d'acquisition configuré pour acquérir une caractéristique clé d'un flux d'utilisateur ;
un deuxième module d'acquisition configuré pour acquérir une ressource de fournisseur de services Internet (ISP) et mettre en cache la ressource ISP acquise dans une file d'attente de cache, dans lequel la ressource ISP est générée conformément à un message de demande de flux TCP de l'utilisateur ;
un troisième module d'acquisition configuré pour acquérir un trafic accumulé de l'utilisateur, dans lequel le trafic accumulé de l'utilisateur est un trafic accumulé de tous les messages de demande de flux TCP de l'utilisateur ;
un quatrième module d'acquisition configuré pour acquérir un indice d'activité d'un flux actuel supporté par un bloc de contrôle TCP correspondant à l'utilisateur, si le trafic accumulé est supérieur à un seuil de trafic accumulé prédéfini ;
un cinquième module d'acquisition configuré pour acquérir une liste d'utilisateurs les plus branchés dans un système actuel si un indice d'activité actuel supérieur à un seuil d'activité prédéfini est disponible, la liste d'utilisateurs les plus branchés comprenant un nombre prédéfini d'utilisateurs dans le système actuel, dans lequel, pour chacun des utilisateurs compris dans la liste d'utilisateurs les plus branchés, le trafic accumulé dépasse le seuil de trafic accumulé prédéfini et l'indice d'activité du flux actuel est supérieur à un indice d'activité prédéfini ;
un sixième module d'acquisition, configuré pour acquérir les plus petites fenêtres de congestion correspondant aux utilisateurs respectifs dans la liste d'utilisateurs les plus branchés, si l'utilisateur n'est pas dans la liste d'utilisateurs les plus branchés ;
un module d'ajout configuré pour ajouter l'utilisateur à la liste d'utilisateurs les plus branchés si une fenêtre de congestion actuelle de l'utilisateur est supérieure à la plus petite fenêtre de congestion ;
un module de détermination configuré pour déterminer une fenêtre de congestion recommandée d'un bloc de contrôle de couche de protocole TCP conformément à la caractéristique clé ; et
un module de transmission configuré pour envoyer la ressource ISP mise en cache dans la file d'attente de cache sous la forme d'un paquet de données à l'utilisateur conformément à un principe de fenêtre glissante et à la fenêtre de congestion recommandée déterminée.

9. Appareil de contrôle de congestion TCP selon la revendication 8, dans lequel le module de détermination comprend :
un premier sous-module de détermination configuré pour établir un modèle de la fenêtre de congestion recommandée comprenant des groupes pour des utilisateurs et des fenêtres de congestion recommandées correspondant chacune à l'un des groupes, et déterminer la fenêtre de congestion recommandée correspondant à l'utilisateur conformément au groupe de l'utilisateur déterminé conformément à la caractéristique clé ; ou
un second sous-module de détermination configuré pour acquérir des indicateurs opérationnels de base d'utilisateurs échantillons pour établir un modèle d'apprentissage profond et effectuer un apprentissage de modèle d'apprentissage profond, acquérir une fonction d'adaptation entre l'indicateur opérationnel de base et une congestion de réseau ou une fonction d'adaptation entre l'indicateur opérationnel de base et un temps de retard dépassant une valeur de retard prédéfinie, et déterminer la fenêtre de congestion recommandée correspondant à l'utilisateur conformément à la fonction d'adaptation et à la caractéristique clé.

10. Appareil de contrôle de congestion TCP selon la revendication 9, dans lequel le premier sous-module de détermination comprend en outre :
un module d'acquisition d'échantillon configuré pour acquérir l'indicateur opérationnel de base de chaque utilisateur échantillon ;
un module d'algorithme de regroupement configuré pour traiter l'indicateur opérationnel de base avec un algorithme de regroupement pour obtenir des groupes préliminaires pour des utilisateurs et des fenêtres de congestion recommandées préliminaires correspondant chacune à l'un des groupes préliminaires ;
un module d'acquisition de signal d'incitation négative configuré pour acquérir un signal d'incitation négative généré lorsqu'un utilisateur dans chacun des groupes préliminaires et réaliser une procédure opérationnelle TCPO conformément à une fenêtre de congestion recommandée préliminaire correspondante ; et
un module de re-détermination configuré pour redéterminer des groupes pour les utilisateurs échantillons et les fenêtres de congestion recommandées correspondant chacune à l'un des groupes en prenant le signal d'incitation négative comme indice d'examen d'échantillon négatif.

11. Appareil de contrôle de congestion TCP selon la revendication 8, dans lequel le quatrième module d'acquisition comprend en outre :
un premier sous-module du quatrième module d'acquisition configuré pour acquérir un indice d'activité rapporté la dernière fois et un moment où l'indice d'activité a été rapporté la dernière fois, lors de recevoir un accusé de réception ;
un premier module de détermination d'indice d'activité configuré pour faire en sorte que l'indice d'activité actuel soit égal à une somme de l'indice d'activité rapporté la dernière fois plus une valeur accumulée linéaire, si la fenêtre de congestion actuelle est supérieure à une fenêtre de congestion prédéfinie, un intervalle de temps entre le moment actuel et le moment où l'indice d'activité a été rapporté la dernière fois est supérieur à un intervalle de temps prédéfini, et l'indice d'activité rapporté la dernière fois est inférieur à un indice d'activité maximal ;
un deuxième module de détermination d'indice d'activité configuré pour faire en sorte que l'indice d'activité actuel soit égal à un indice d'activité initial si l'indice d'activité rapporté la dernière fois ne peut pas être acquis, lors de recevoir l'accusé de réception.

12. Terminal, comprenant un processeur, une mémoire et un bus de communication ;
dans lequel le bus de communication est configuré pour mettre en oeuvre une communication de connexion entre le processeur et la mémoire ; et le processeur est configuré pour exécuter un ou plusieurs programmes informatiques stockés dans la mémoire de manière à mettre en oeuvre le procédé de contrôle de congestion TCP selon l'une quelconque des revendications 1 à 7.

13. Support de stockage lisible par ordinateur stockant un ou plusieurs programmes informatiques dans celui-ci, dans lequel les programmes informatiques sont exécutables par un ou plusieurs processeurs pour mettre en oeuvre le procédé de contrôle de congestion TCP selon l'une quelconque des revendications 1 à 7.
